# EUROPÄISCHE PATENTSCHRIFT

(11) **EP 4 348 416 B1**
(45) Veröffentlichungstag und Bekanntmachung des Hinweises auf die Patenterteilung: **11.11.2026**
(21) Anmeldenummer: 22734522.0
(22) Anmeldetag: 03.06.2022
(51) Int. Cl.: G06F 8/34, G05B 19/05

(54) **VERFAHREN ZUM ERZEUGEN EINES STEUERPROGRAMMS FÜR EIN AUTOMATISIERUNGSSYSTEM UND PROGRAMMIERWERKZEUG**
METHOD FOR GENERATING A CONTROL PROGRAM FOR AN AUTOMATION SYSTEM, AND PROGRAMMING TOOL
PROCÉDÉ POUR GÉNÉRER UN PROGRAMME DE COMMANDE DESTINÉ À UN SYSTÈME D'AUTOMATISATION ET OUTIL DE PROGRAMMATION

(30) Priorität: 04.06.2021 DE 102021114449
(43) Veröffentlichungstag der Anmeldung: 10.04.2024
(73) Patentinhaber: Beckhoff Automation GmbH, 33415 Verl (DE)
(72) Erfinder: DREESEN, Ralf, 33397 Rietberg (DE)
(74) Vertreter: Patentanwaltskanzlei WILHELM & BECK
(86) Internationale Anmeldenummer: PCT/EP2022/065195
(87) Internationale Veröffentlichungsnummer: WO 2022/254009

(56) Entgegenhaltungen:
- MILIK ADAM ED - PULKA ANDRZEJ ET AL: "On hardware synthesis and implementation of PLC programs in FPGAs", MICROPROCESSORS AND MICROSYSTEMS, IPC BUSINESS PRESS LTD. LONDON, GB, vol. 44, 13 February 2016 (2016-02-13), pages 2 - 16, XP029580111, ISSN: 0141-9331, DOI: 10.1016/J.MICPRO.2016.02.003

## Beschreibung

Die Erfindung betrifft ein Verfahren zum Erzeugen eines Steuerprogramms zum Steuern eines Automatisierungssystems und ein Programmierwerkzeug zum Ausführen des Verfahrens.

Diese Patentanmeldung beansprucht die Priorität der deutschen Patentanmeldung DE 10 2021 114 449.3.

Zur Programmierung von Steuerprogrammen für speicherprogrammierbare Steuerungen SPS sind in der Norm IEC61131-3 fünf Programmiersprachen definiert. Unter den fünf definierten Programmiersprachen sind sowohl textbasierte Programmiersprachen als auch graphische Programmiersprachen. Eine der graphischen Programmiersprachen für die Programmierung von speicherprogrammierbaren Steuerungen ist Kontaktplan KOP - Ladder Diagramm LD oder Ladder Logic im Englischen. Die Programmiersprache Kontaktplan KOP ermöglicht dem Nutzer zur Programmierung von Steuerprogrammen für speicherprogrammierbare Steuerungen graphische Diagramme zu erstellen. Die graphischen Diagramme sind hierbei an Stromlaufpläne von Relais-Schaltungen angelehnt. Elemente der graphischen Diagramme werden der Anlehnung folgend als Spannungsschienen, Kontakte und (Relais)-Spulen bezeichnet. Verbindungslinien zwischen Elementen der graphischen Elemente repräsentieren der Anlehnung folgend einen Stromfluss zwischen den Elementen.

In der Interpretation der graphischen Diagramme als Steuerprogramme sind die einzelnen Elemente mit Variablen des Steuerprogramms assoziiert. Die Elemente können entweder aktiviert oder deaktiviert werden, wobei die jeweiligen Variablen mit den entsprechenden Werten 1 oder 0 versehen werden.

Zur Umsetzung der graphischen Diagramme in entsprechend ausführbare Steuerprogramme werden graphische Diagramme für gewöhnlich zunächst in textbasierte Repräsentationen überführt, die geeignet sind, die Information der graphischen Diagramme darzustellen. Hierzu werden im Stand der Technik graphische Diagramme hierarchisch strukturiert und in hierarchisch geordnete Einheiten aufgeteilt. Diese Einheiten können beispielsweise aus einzelnen Elementen, Gruppen von seriell angeordneten Elementen oder Gruppen von parallel angeordneten Elementen bestehen.

Derartige hierarchische Strukturierungen stellen jedoch eine starke Einschränkung an die Erzeugung von graphischen Diagrammen dar, da im Gegenzug ausschließlich graphische Diagramme möglich sind, die in eindeutiger Weise in entsprechend hierarchischen Strukturen ausdrückbar sind.

Dies hat zur Folge, dass im Stand der Technik derzeit nicht alle die Anforderungen der Norm IEC61131-3 erfüllenden graphischen Diagramme tatsächlich erzeugt werden können, beziehungsweise diese umständlich erweitert und verkompliziert werden müssen, um den Anforderungen der hierarchischen Strukturen zu genügen. Insbesondere bei Äderungen bereits bestehender graphischer Diagramme sind die unterliegenden hierarchischen Strukturen hinderlich, da bereits kleine Änderungen im graphischen Diagramm gravierende strukturelle Änderungen in der unterliegenden hierarchischen Strukturen erfordern können, wodurch in der Folge komplexe Änderungen und teilweise vollständige Umstrukturierungen der graphischen Diagramme notwendig werden können, um sowohl die gewünschten Änderungen berücksichtigen und darüber hinaus den Anforderungen der hierarchischen Strukturen genügen zu können.

In diesem Zusammenhang sei auf die Publikation MILIK ADAM: "On hardware synthesis and implementation of PLC programs in FPGAs", MICROPROCESSORS AND MICROSYSTEMS, IPC BUSINESS PRESS LTD. LONDON, GB, Bd. 44, 13. Februar 2016, Seiten 2-16, ISSN: 0141-9331, DOI: 10.1016/J.MICPRO.2016.02.003 hingewiesen, welche die Umwandlung eines Kontaktplan-Diagramms in ein Datenflussdiagramm zu Analyse- und Optimierungszwecken, um Befehlssequenzen für ein Steuerungsprogramm einer SPS zu erstellen, offenbart.

Es ist daher eine Aufgabe der Erfindung, ein verbessertes Verfahren zum Erzeugen eines Steuerprogramms zum Steuern eines Automatisierungssystems bereitzustellen. Eine weitere Aufgabe der Erfindung ist es, ein Programmierwerkzeug zum Ausführen des Verfahrens und ein Verfahren zum Steuern eines Automatisierungssystems bereitzustellen.

Die Aufgabe wird durch ein Verfahren zum Erzeugen eines Steuerprogramms zum Steuern eines Automatisierungssystems, ein Programmierwerkzeug und ein Verfahren zum Steuern eines Automatisierungssystems gemäß den unabhängigen Ansprüchen gelöst. Bevorzugte Ausführungsformen sind in den abhängigen Ansprüchen angegeben.

Nach einem Aspekt der Erfindung wird ein Verfahren zum Erzeugen eines Steuerprogramms zum Steuern eines Automatisierungssystems bereitgestellt, wobei das Verfahren mitunter, aber nicht nur, Folgendes umfasst:
Generieren eines graphischen Diagramms des Steuerprogramms gemäß der graphischen Programmiersprache Kontaktplan KOP für Speicherprogrammierbare Steuerungen in einem Diagrammgenerierungsschritt;
Generieren eines Datenflussgraphen als eine Repräsentation des graphischen Diagramms in einem Graphgenerierungsschritt, wobei Elemente des graphischen Diagramms als Knoten und Verbindungslinien zwischen Elementen des graphischen Diagramms als Kanten des Datenflussgraphen repräsentiert sind; und
Generieren einer durch eine Speicherprogrammierbare Steuerung ausführbaren Version des Steuerprogramms basierend auf dem Datenflussgraph in einem Programmgenerierungsschritt.

Hierdurch kann der technische Vorteil erreicht werden, dass ein verbessertes Verfahren zum Erzeugen eines Steuerprogramms zum Steuern eines Automatisierungssystems bereitgestellt werden kann. Das Verfahren basiert auf einer Programmierung von Steuerprogrammen unter Verwendung der für die Programmierung von Programmen für speicherprogrammierbare Steuerungen SPS definierten graphischen Programmiersprache Kontaktplan KOP. Das erfindungsgemäße Verfahren sieht hierzu eine Repräsentation der gemäß der graphischen Programmiersprache Kontaktplan KOP erstellten graphischen Diagrammen in Form von Datenflussgraphen vor. Durch die Repräsentation der graphischen Diagramme durch entsprechende Datenflussgraphen, bei denen Knoten der Datenflussgraphen entsprechenden Elementen der durch die Datenflussgraphen repräsentierten graphischen Diagramme und Kanten der Datenflussgraphen Verbindungslinien der graphischen Diagramme entsprechen, ist eine erhöhte Flexibilität in der Erzeugung der graphischen Diagramme zum graphischen Programmieren der Steuerprogramme ermöglicht. Die Repräsentation der graphischen Diagramme durch entsprechende Datenflussgraphen dient hierbei als Ersatz der aus dem Stand der Technik bekannten Repräsentation der graphischen Diagramme durch entsprechende hierarchische Strukturen.

Durch die flexible Repräsentation in Form der Datenflussgraphen können graphische Diagramme erzeugt werden, die den Anforderungen der Programmiersprache Kontaktplan KOP entsprechen, die durch die hierarchische Repräsentation aus Stand der Technik derzeit jedoch nicht darstellbar sind. Darüber hinaus können durch die Repräsentation durch die Datenflussgraphen graphische Diagramme erstellt werden, die in Komplexität gegenüber denen im Stand der Technik erzeugbaren graphischen Diagrammen vereinfacht sind, jedoch eine identische Funktionalität aufweisen. Durch die Vereinfachung der graphischen Diagramme, die beispielsweise mit weniger Elementen und damit verbunden mit weniger Verbindungslinien auskommen, kann zum einen die graphische Programmierung und Erzeugung der graphischen Diagramme vereinfacht und damit verbunden eine schnellere Programmierung bereitgestellt werden. Zum anderen sind die weniger komplex gestalteten graphischen Diagramme einfacher lesbar, übersichtlicher und somit besser verständlich. Darüber hinaus kann durch die Reduzierung der Komplexität der graphischen Diagramme ebenfalls die Komplexität der jeweils durch die graphischen Diagramme ausgedrückten Steuerprogramme vereinfacht werden. Durch derartige Steuerprogramme kann wiederum Rechenkapazität zur Ausführung der Steuerprogramme reduziert werden. Hierdurch kann eine schnellere und weniger Rechenkapazität fordernde Steuerung von Automatisierungssystemen bzw. speicherprogrammierbaren Steuerungen durch Ausführung entsprechender Steuerprogramme erreicht werden.

Ein graphisches Diagramm ist im Sinne der Anmeldung eine graphische Darstellung, die durch graphische Programmiervorgänge erzeugt ist, und gemäß den Definitionen der graphischen Programmiersprache Kontaktplan KOP eine Darstellung eines Steuerprogramms eines Automatisierungssystems bzw. einer speicherprogrammierbaren Steuerung bereitstellt.

Im Sinne der Anmeldung ist ein Datenflussgraph eine graphbasierte Darstellung der Information eines entsprechenden graphischen Diagramms. Der Datenflussgraph umfasst hierbei eine Mehrzahl von Knoten und von die Knoten miteinander verbindenden Kanten, wobei die Knoten Repräsentationen der Elemente und die Kanten Repräsentationen der Verbindungslinien eines jeweiligen graphischen Diagramms darstellen. Der Datenflussgraph ist erfindungsgemäß derart ausgestaltet, dass neben der vollständigen Information des jeweiligen graphischen Diagramms ein Datenfluss innerhalb des graphischen Diagramms durch den Datenflussgraph dargestellt ist.

Eine ausführbare Version eines Steuerprogramms kann im Sinne der Anmeldung beispielsweise eine Binärfassung des auszuführenden Steuerprogramms sein.

Erfindungsgemäß umfasst der Diagrammgenerierungsschritt:
Empfangen von graphischen Programmieraufforderungen gemäß der graphischen Programmiersprache Kontaktplan KOP in einem Empfangsschritt, wobei die graphischen Programmieraufforderungen ein Hinzufügen und/oder ein Entfernen und/oder ein Neuanordnen von Elementen und/oder Verbindungslinien des graphischen Diagramms umfassen;
wobei der Graphgenerierungsschritt umfasst:
   Modifizieren des Datenflussgraphen durch Hinzufügen und/oder Entfernen und/oder Neuanordnen von Knoten und/oder Kanten des Datenflussgraphs gemäß den Programmieraufforderungen in einem Programmierschritt; und wobei der Diagrammgenerierungsschritt umfasst:
   Hinzufügen und/oder Entfernen und/oder Neuanordnen von Elementen und/oder Verbindungslinien innerhalb des graphischen Diagramms basierend auf den Modifikationen des Datenflussgraphs und gemäß den graphischen Programmieraufforderungen in einem graphischen Programmierschritt.

Hierdurch kann der technische Vorteil erreicht werden, dass eine vereinfachte und effiziente Programmierung gemäß der graphischen Programmiersprache Kontaktplan KOP ermöglicht ist. Hierzu werden basierend auf den graphischen Programmieraufforderungen, die gemäß der graphischen Programmiersprache Kontaktplan KOP zum Erstellen von Steuerprogrammen zur Verfügung stehen, sowohl die graphischen Diagramme als auch die entsprechenden Datenflussgraphen entsprechend modifiziert.

Modifizieren umfasst hierbei sowohl das Erstellen von neuen Datenflussgraphen bzw. entsprechenden graphischen Diagrammen als auch das Abändern bereits bestehender Datenflussgraphen bzw. entsprechender graphischer Diagramme. Durch das entsprechende Ausführen der graphischen Programmieraufforderungen werden sowohl das jeweils zu erstellende bzw. abzuändernde graphische Diagramm als auch der das graphische Diagramm repräsentierende Datenflussgraph erzeugt bzw. abgeändert. Der Datenflussgraph beschreibt hierbei eine dem graphischen Diagramm unterliegende Repräsentation der Information des graphischen Diagramms. Die Struktur des dem graphischen Diagramm unterliegenden Datenflussgraphen legt hierbei die Änderungs- bzw. Erzeugungsmöglichkeiten des graphischen Diagramms fest. Es können somit ausschließlich graphische Diagramme erzeugt bzw. geändert werden, deren Informationen in einem entsprechenden Datenflussgraph darstellbar sind.

Wie oben angeführt können über die Repräsentation der graphischen Diagramme in Form der Datenflussgraphen graphische Diagramme erzeugt werden, deren Komplexität gegenüber dem Stand der Technik reduziert ist, und somit Steuerprogramme erzeugt werden, die mit reduzierter Rechenkapazität ausführbar sind.

Nach einer Ausführungsform umfasst der Diagrammgenerierungsschritt:
Einlesen eines in der graphischen Programmiersprache Kontaktplan KOP programmierten Steuerprogramms in einem Leseschritt;
Generieren eines Datenflussgraphen basierend auf der Information des eingelesenen Steuerprogramms in einem zweiten Graphgenerierungsschritt; und
Generieren des graphischen Diagramms basierend auf der Information des Datenflussgraphs in einem Darstellungsschritt.

Hierdurch kann der technische Vorteil erreicht werden, dass eine präzise Änderung von bereits bestehenden Steuerprogrammen, die gemäß der graphischen Programmiersprache Kontaktplan KOP programmiert sind, bereitgestellt ist. Die bereits bestehenden Steuerprogramme werden hierzu zunächst eingelesen und basierend auf der Information der eingelesenen Steuerprogramme werden entsprechende Datenflussgraphen und durch diese repräsentierte graphische Diagramme erzeugt. Hierdurch ist eine erhöhte Flexibilität erreicht, indem sowohl neue Steuerprogramme erzeugt als auch bereits bestehende Steuerprogramme modifiziert werden können. Durch die Darstellung der graphischen Diagramme der bereits bestehenden Steuerprogramme durch die erfindungsgemäßen Datenflussgraphen können die bereits bestehenden Steuerprogramme mit erhöhter Flexibilität abgeändert bzw. modifiziert werden. Die Repräsentation durch die Datenflussgraphen ersetzt hierbei eine ursprüngliche Repräsentation durch die hierarchischen Strukturen. Die Modifikationen der Steuerprogramme sind daher nicht durch die im Stand der Technik bekannte auf den hierarchischen Strukturen der Repräsentationen der graphischen Diagramme basierenden Einschränkungen beschränkt.

Nach einer Ausführungsform umfassen der graphische Programmierschritt und/oder der Darstellungsschritt:
Überführen der Knoten des Datenflussgraphen in Elemente des graphischen Diagramms und Anordnen der Elemente in einer zweidimensionalen Anordnung in einem ersten Anordnungsschritt;
Überführen der Kanten des Datenflussgraphen in Verbindungslinien zwischen Elementen des graphischen Diagramms und Anordnen der Verbindungslinien zwischen den Elementen des graphischen Diagramms in einem zweiten Anordnungsschritt, wobei jede Verbindungslinie ausschließlich horizontale und/oder vertikale Komponenten aufweist und ausschließlich zwei Elemente verbindet.

Hierdurch kann der technische Vorteil erreicht werden, dass basierend auf der Repräsentation in Form der Datenflussgraphen eine eindeutige Darstellung des zu programmierenden Steuerprogramms in Form des den Anforderungen der graphischen Programmiersprache Kontaktplan KOP folgenden graphischen Diagrammen ermöglicht ist. Hierzu werden die Knoten der Datenflussgraphen in Elemente der jeweiligen graphischen Diagramme überführt und in zweidimensionalen Anordnungen angeordnet. Hierdurch kann eine übersichtliche Darstellung des graphischen Diagramms erreicht werden.

Darüber hinaus werden die Kanten der Datenflussgraphen in entsprechende Verbindungslinien zwischen jeweiligen Elementen der graphischen Diagramme überführt, wobei die Verbindungslinien zwischen den in den zweidimensionalen Anordnungen angeordneten Elementen der graphischen Diagramme ausschließlich horizontale oder vertikale Komponenten aufweisen. Hierdurch entsprechen die Verbindungslinien den in der oben genannten Norm definierten Anforderungen der graphischen Programmiersprache Kontaktplan KOP. Durch die eindeutige Überführung der Knoten und Kanten der Datenflussgraphen in entsprechende Elemente und Verbindungslinien der graphischen Diagramme sind graphische Diagramme mit möglichst geringer Komplexität ermöglicht, die auf eine Mindestanzahl an benötigten Elementen und Verbindungslinien beschränkt sind. Hierdurch können möglichst effiziente Steuerprogramme erreicht werden, die mittels einer minimierten Rechenkapazität ausführbar sind.

Nach einer Ausführungsform ist die zweidimensionale Anordnung als eine Matrixanordnung mit einer Mehrzahl von Parzelleneinheiten ausgebildet, wobei jedes Element in einer Parzelleneinheit angeordnet ist, und wobei die Verbindungslinien wenigstens teilweise entlang Trennlinien zwischen Parzelleneinheiten angeordnet sind.

Hierdurch kann der technische Vorteil erreicht werden, dass eine übersichtliche Darstellung der Elemente und Verbindungslinien der graphischen Diagramme ermöglicht ist. Hierdurch sind überschaubare und einfach zu lesende graphische Diagramme erreichbar.

Nach einer Ausführungsform ist der Datenflussgraph als ein azyklischer Graph ausgebildet und umfasst einen Anfangsknoten und einen Endknoten.

Hierdurch kann der technische Vorteil erreicht werden, dass eine eindeutige Zuordnung zwischen erzeugten Datenflussgraphen und entsprechenden graphischen Diagrammen erzielbar ist. Indem die Datenflussgraphen in azyklischer Form ausgebildet sind, können Anfangs- und Endknoten identifiziert werden, wodurch eine Reihenfolge der Knoten der Datenflussgraphen ermittelbar ist. Die Anfangs- und Endknoten können für die Repräsentation der entsprechenden graphischen Diagramme jeweils als linke bzw. rechte Spannungsschienen der graphischen Diagramme identifiziert werden, so dass eine eindeutige Zuordnung der einzelnen Knoten der Datenflussgraphen und der jeweiligen Elemente der dazugehörigen graphischen Diagramme ermöglicht ist. Hierdurch kann in eindeutiger Weise zu jedem Datenflussgraph ein zugeordnetes graphisches Diagramm ermittelt werden, dass den identischen Informationsgehalt zum dazugehörigen Datenflussgraph aufweist. Dies ermöglicht eine eindeutige graphische Programmierung des Steuerprogramms.

Nach einer Ausführungsform umfassen der graphische Programmierschritt und/oder der Darstellungsschritt:
Topologisches Sortieren der Knoten des Datenflussgraphen und der entsprechenden Elemente des jeweiligen graphischen Diagramms in einem Sortierschritt, wobei in dem topologischen Sortieren eine Reihenfolge der Knoten des Datenflussgraphen und der entsprechenden Elemente des graphischen Diagramms ermittelt wird, und wobei die Reihenfolge einer Entfernung eines jeden Knotens zum Anfangsknoten entspricht; und
Anordnen der Elemente des graphischen Diagramms gemäß der Reihenfolge der topologischen Sortierung im Anordnungsschritt.

Hierdurch kann der technische Vorteil erreicht werden, dass überschaubar angeordnete und damit einfach zu lesende graphische Diagramme ermöglicht sind. Durch das topologische Sortieren der Knoten der Datenflussgraphen, bei dem eine Reihenfolge der Knoten in Abhängigkeit der Abstände der jeweiligen Knoten zum Anfangsknoten der Datenflussgraphen erzielt wird, und durch das Anordnen der Elemente der dazugehörigen graphischen Diagramme gemäß der im topologischen Sortieren erzeugten Reihenfolge der jeweiligen Elemente können möglichst übersichtliche graphische Diagramme erzeugt werden, bei denen möglichst geringe Distanzen zwischen den linken und rechten Spannungsschienen und den jeweiligen Elementen der graphischen Diagramme ermöglicht ist. Durch die hierdurch erreichte Übersichtlichkeit kann eine vereinfacht graphische Programmierung der Steuerprogramme erreicht werden. Durch die vereinfachte graphische Programmierung kann der zum Erstellen des Steuerprogramms benötigte Zeitaufwand minimiert werden. Darüber hinaus trägt die Übersichtlichkeit der erzeugten graphischen Diagramme zur Qualität der durch die graphische Programmierung erzeugten Steuerprogramme bei, die hierbei ebenfalls in übersichtlicher und damit verbunden effizienterer Form ausgestaltet werden können, wodurch eine zur Ausführung der entsprechenden Steuerprogramme benötigten Rechenkapazität reduziert werden kann.

Nach einer Ausführungsform umfassen der graphische Programmierschritt und/oder der Darstellungsschritt:
Optimieren der Anordnung der Elemente und/oder der Verbindungslinien des graphischen Diagramms mittels eines Optimierungsalgorithmus in einem Optimierungsschritt, wobei das Optimieren ein Minimieren von Längen der Verbindungslinien und/oder ein Minimieren von Abständen von Elementen und/oder ein Vermeiden von Kreuzungen mehrerer Verbindungslinien umfasst.

Hierdurch kann der technische Vorteil erreicht werden, dass die Übersichtlichkeit der graphischen Diagramme weiter optimiert werden kann. Dies trägt wiederum erneut zur weiteren Erleichterung der graphischen Programmierung und damit verbunden zur Reduzierung des zum Erstellen des Steuerprogramms benötigten Zeitaufwands und zur Steigerung der Effizienz der erzeugten Steuerprogramme bei.

Nach einer Ausführungsform sind Kanten des Datenflussgraphs als gerichtete Kanten ausgebildet, wobei eine Richtung einer Kante zwischen zwei Knoten des Datenflussgraphen einen Stromfluss zwischen den durch die Knoten repräsentierten Elementen des graphischen Diagramms repräsentiert.

Hierdurch kann der technische Vorteil erreicht werden, dass eine eindeutige Zuordnung zwischen Datenflussgraph und dazugehörigem graphischem Diagramm ermöglicht ist. Hierdurch ist eine präzise graphische Programmierung der Steuerprogramme basierend auf den graphischen Diagrammen der graphischen Programmiersprache Kontaktplan KOP und den jeweils als Repräsentation dienenden Datenflussgraphen ermöglicht. Durch die gerichteten Kanten der Datenflussgraphen ist eine eindeutige Interpretation des Datenflusses ausgehend vom Anfangsknoten des Datenflussgraph in Richtung des Endknotens des Datenflussgraphen ermöglicht, die dem Stromfluss innerhalb des graphischen Diagramms ausgehend von der linken Spannungsschiene in Richtung der rechten Spannungsschiene entspricht.

Nach einer Ausführungsform umfassen Elemente des graphischen Diagramms Spannungsschienen und/oder Kontakte und/oder Spulen und/oder Funktionsblockinstanzen und/oder Funktionsblöcke und/oder weitere gemäß der Programmiersprache Kontaktplan KOP definierte Elemente.

Hierdurch kann der technische Vorteil erreicht werden, dass basierend auf den Datenflussgraphen eindeutige graphische Diagramme erzeugbar sind, die den Anforderungen der graphischen Programmiersprache Kontaktplan KOP entsprechen. Dies ermöglicht eine präzise graphische Programmierung von Steuerprogrammen zum Steuern von Automatisierungssystemen.

Nach einer Ausführungsform umfasst das Verfahren ferner:
Speichern des Datenflussgraphs in einer Textdarstellung und/oder Speichern der ausführbaren Version des Steuerprogramms in einer Ausführungsdatei in einem Speicherschritt.

Hierdurch kann der technische Vorteil erreicht werden, dass ein effizientes Verfahren zum Erzeugen von Steuerprogrammen bereitgestellt werden kann. Durch das Speichern der Datenflussgraphen in Textdarstellungen können die entsprechenden Datenflussgraphen zu späteren Zeitpunkten erneut eingelesen werden, um hierbei eine Modifikation der programmierten Steuerprogramme zu erreichen. Durch das Speichern der ausführbaren Versionen des Steuerprogramms können die entsprechenden Steuerprogramme zu späteren Zeitpunkten auf beliebigen Datenverarbeitungseinheiten ausgeführt werden.

Nach einem zweiten Aspekt wird ein Programmierwerkzeug zum Erzeugen eines Steuerprogramms zum Steuern eines Automatisierungssystems bereitgestellt, wobei das Programmierwerkzeug eine graphische Editoreinheit und eine Übersetzungseinheit umfasst und eingerichtet ist, das Verfahren nach einer der voranstehenden Ausführungsformen auszuführen.

Hierdurch kann der technische Vorteil erreicht werden, dass ein verbessertes Programmierwerkzeug bereitgestellt werden kann, das eingerichtet ist, das erfindungsgemäße Verfahren zum Erzeugen von Steuerprogrammen mit den oben genannten technischen Vorteilen auszuführen.

Nach einem dritten Aspekt wird ein Verfahren zum Steuern eines Automatisierungssystems durch Ausführen eines Steuerprogramms bereitgestellt, wobei das Steuerprogramm durch das Verfahren zum Erzeugen eines Steuerprogramms zum Steuern eines Automatisierungssystems nach einer der voranstehenden Ausführungsformen erzeugt ist.

Hierdurch kann der technische Vorteil erreicht werden, dass ein verbessertes Verfahren zum Steuern eines Automatisierungssystems bereitgestellt werden kann, wobei die Steuerung durch Ausführung eines Steuerprogramms mit den oben genannten technischen Vorteilen durchgeführt wird.

Die Erfindung wird anhand der beigefügten Figuren näher erläutert. Hierbei zeigen:
- Fig. 1: eine schematische Darstellung eines graphischen Diagramms gemäß der Programmiersprache Kontaktplan KOP und eines Datenflussgraphen;
- Fig. 2: eine weitere schematische Darstellung eines weiteren graphischen Diagramms gemäß der Programmiersprache Kontaktplan KOP und eines weiteren Datenflussgraphen;
- Fig. 3: eine weitere schematische Darstellung eines weiteren graphischen Diagramms gemäß der Programmiersprache Kontaktplan KOP und eines weiteren Datenflussgraphen;
- Fig. 4: eine weitere schematische Darstellung eines weiteren graphischen Diagramms gemäß der Programmiersprache Kontaktplan KOP und eines weiteren Datenflussgraphen;
- Fig. 5: eine weitere schematische Darstellung eines weiteren graphischen Diagramms gemäß der Programmiersprache Kontaktplan KOP und eines weiteren Datenflussgraphen;
- Fig. 6: eine schematische Darstellung eines Verfahrens zum Erzeugen eines Steuerprogramms zum Steuern eines Automatisierungssystems gemäß einer Ausführungsform;
- Fig. 7: ein Flussdiagramm des Verfahrens zum Erzeugen eines Steuerprogramms zum Steuern eines Automatisierungssystems gemäß einer Ausführungsform;
- Fig. 8: ein weiteres Flussdiagramm des Verfahrens zum Erzeugen eines Steuerprogramms zum Steuern eines Automatisierungssystems gemäß einer weiteren Ausführungsform;
- Fig. 9: ein weiteres Flussdiagramm des Verfahrens zum Erzeugen eines Steuerprogramms zum Steuern eines Automatisierungssystems gemäß einer weiteren Ausführungsform;
- Fig. 10: ein weiteres Flussdiagramm des Verfahrens zum Erzeugen eines Steuerprogramms zum Steuern eines Automatisierungssystems gemäß einer weiteren Ausführungsform; und
- Fig. 11: eine schematische Darstellung eines Programmierwerkzeugs gemäß einer Ausführungsform.

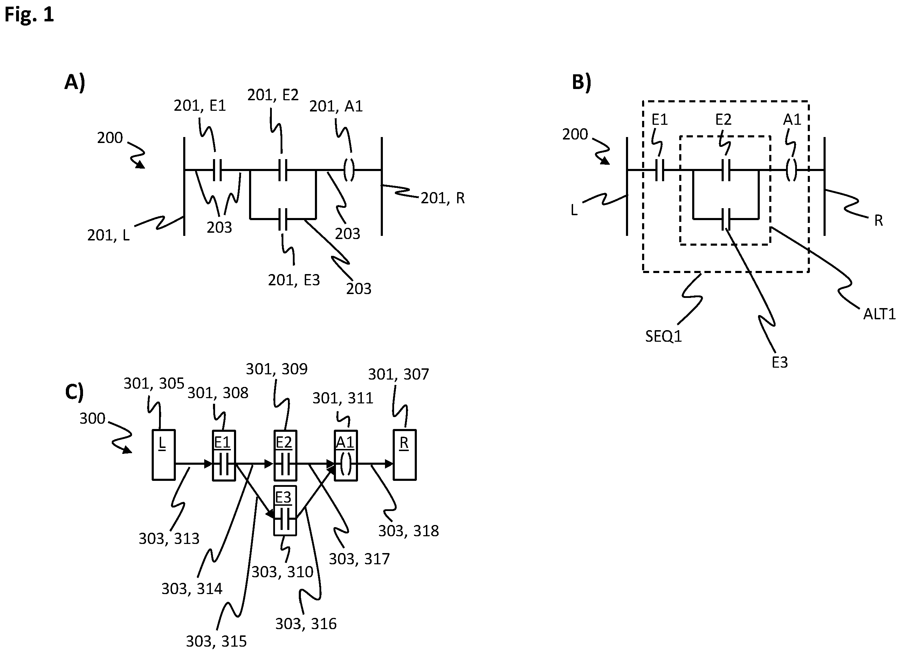

Fig. 1 zeigt eine schematische Darstellung eines graphischen Diagramms 200 und gemäß der Programmiersprache Kontaktplan KOP und eines Datenflussgraphen 300.

In den folgenden Figuren 1 bis 5 werden Eigenschaften und Vorteile des erfindungsgemäßen Verfahrens zum Erzeugen von Steuerprogrammen zum Steuern von Automatisierungssystem anhand verschiedener graphischer Beispiele erläutert. Hierzu wird insbesondere die Darstellung bzw. Repräsentation des gemäß der graphischen Programmiersprache Kontaktplan KOP erstellten graphischen Diagramms 200 in entsprechenden Datenflussgraphen 300 beschrieben bzw. vorgestellt. Darüber hinaus werden Vorteile der Repräsentation der graphischen Diagramme 200 im entsprechenden Datenflussgraphen 300 gegenüber der im Stand der Technik bekannten hierarchischen Strukturierung der graphischen Diagramme 200 erläutert.

Die in den folgenden Figuren 1 bis 5 dargestellten graphischen Diagramme dienen ausschließlich illustrativen Zwecken und stellen keine tatsächlichen Beispiele für gemäß der graphischen Programmiersprache Kontaktplan KOP programmierten Steuerprogramme für Automatisierungssysteme dar. Die verwendeten Symbole der graphischen Diagramme 200, wie auch der Datenflussgraphen 300, entsprechen der üblichen Nomenklatur der graphischen Programmiersprache Kontaktplan KOP. Von einer detaillierten Beschreibung einzelner Elemente der graphischen Diagramme 200 bzw. derer Funktion oder Wirkung innerhalb der graphischen Diagramme bzw. der durch diese ausgedrückten Steuerprogramme wird abgesehen. In diesem Zusammenhang wird auf die oben genannte Norm IEC61131-3 bzw. auf im Stand der Technik bekannte Erläuterungen zur graphischen Programmiersprache Kontaktplan KOP verwiesen.

Die Graphik A der Figur 1 zeigt ein beispielhaftes graphisches Diagramm 200, das gemäß der graphischen Programmiersprache Kontaktplan KOP erstellt ist. Das graphische Diagramm 200 weist gemäß den Anforderungen der graphischen Programmiersprache Kontaktplan KOP eine Mehrzahl von Elementen 201 auf, die über geradlinige Verbindungslinien 203 miteinander verbunden sind. Das Diagramm 200 weist in diesem Zusammenhang eine linke Spannungsschiene L und eine rechte Spannungsschiene R auf, zwischen denen ein erster Kontakt E1, ein zweiter Kontakt E2, ein dritter Kontakt E3 und eine erste Spule A1 über entsprechende Verbindungslinien 203 miteinander verbunden angeordnet sind. In dem gezeigten Diagramm 200 sind der zweite und dritte Kontakt E2, E3 parallel angeordnet und diese Anordnung ist wiederum mit dem ersten Kontakt E1 und der ersten Spule A1 seriell angeordnet. Die Elemente 201 des graphischen Diagramms 200 weisen jeweils Eingänge und Ausgänge auf und eine Verbindung zwischen zwei Elementen 201 über eine Verbindungslinie 203 erfolgt durch eine Anordnung der Verbindungslinie 203 von einem Ausgang eines der Elemente 201 zu einem Eingang des jeweils anderen Elements 201. Ausnahmen hierzu sind die linken und rechten Spannungsschienen L, R. Es bestehen keine Verbindungslinien 203, die auf die linke Spannungslinie L weisen, und keine Verbindungslinien 203, die aus der rechten Spannungslinie R heraus weisen. Verbindungslinien 203 haben die Eigenschaft, dass sie gemeinsame Segmente aufweisen können, sich überlappen können und innerhalb des graphischen Diagramms 200 immer von links nach rechts verlaufen.

Die Elemente 201 des graphischen Diagramms 200 sind hierbei mit Variablen eines Steuerprogramms assoziiert, die wiederum die Werte 1 oder 0 annehmen können. Die Belegung der einzelnen Elemente 201 mit den jeweiligen Werten 1 oder 0 entspricht einem Schalten der entsprechenden Elemente, beispielsweise dem Schalten eines Schalters oder einer Relaisspule. Kontakte beschreiben darüber hinaus Boolesche Eingänge, bei denen der Wert 1 einem Schließen eines Schalters und der Wert 0 einem Öffnen eines Schalters entsprechen. Ein Stromfluss innerhalb des Diagramms, entspricht hierbei einem geschlossenen Schalter und einem Wert 1 links des Schalters.

Die Graphik B der Figur 1 zeigt das in der Graphik A dargestellt graphische Diagramm 200. Darüber hinaus zeigt die Graphik B eine aus dem Stand der Technik bekannte hierarchische Struktur des Diagramms 200. Der hierarchischen Struktur folgend sind die Elemente des Diagramms 200, insbesondere die ersten bis dritten Kontakte E1, E2, E3 und die erste Spule A1 in eine erste Sequenz SEQ1 und eine erste Alternative ALT1 strukturiert.

Eine Sequenz SEQ ist im Sinne der Anmeldung eine Folge von sequentiell bzw. in Bezug auf einen Stromfluss innerhalb des Diagramms von links nach rechts hintereinander angeordneten Elementen bzw. Gruppen von Elementen innerhalb des graphischen Diagramms 200. Eine Alternative ALT ist im Sinne der Anmeldung eine Folge von Elementen bzw. Gruppen von Elementen in paralleler bzw. in Bezug auf den Stromfluss nebeneinander Anordnung zueinander.

In der gezeigten hierarchischen Struktur umfasst die erste Sequenz SEQ 1 den ersten Kontakte E1, die erste Alternative ALT1 und die erste Spule A1. Die erste Alternative ALT1 umfasst hingegen die zwei parallel zueinander angeordneten zweiten und dritten Kontakte E2, E3. Gemäß der gezeigten hierarchischen Struktur kann die Information wie folgt dargestellt sein.
Struktur 1
SEQ1
   Kontakt E1
   ALT1
      Kontakt E2
      Kontakt E3
   Spule A1

In Graphik C der Figur 1 ist eine gemäß der vorliegenden Erfindung strukturierte Repräsentation des graphischen Diagramms 200 in einem entsprechenden Datenflussgraph 300 dargestellt. Der Datenflussgraph 300 umfasst eine Mehrzahl von Knoten 301, die jeweils über eine Mehrzahl von Kanten 303 miteinander verbunden sind. Die Kanten 303 sind als gerichtete Kanten ausgebildet und weisen durch die Pfeile dargestellte Richtungen auf. Über die Richtungen der gerichteten Kanten 303 kann ein Stromfluss des graphischen Diagramms 200 zwischen den einzelnen Knoten 301 repräsentiert sein. Die Knoten 301 entsprechen jeweils den Elementen 201 und die Kanten 303 stellen die Verbindungslinien 203 des graphischen Diagramms 200 dar. Analog zum graphischen Diagramm 200 weisen die Kanten 303 des Datenflussgraphen 300 von einem Ausgang eines Knotens 301 zu einem Eingang eines weiteren Knotens 301. Durch die Richtung der gerichteten Kanten 303 ist der Datenfluss innerhalb des Datenflussgraphen 300 dargestellt, wobei der Datenfluss dem Stromfluss innerhalb des graphischen Diagramms 200 entspricht. Kanten 303 des Datenflussgraphen 300 werden somit nur zwischen den Knoten 301 erstellt, die Repräsentationen von Elementen 201 des graphischen Diagramms 200, zwischen denen im graphischen Diagramm 200 ein direkter Stromfluss vom Ausgang des einen Elements 201 zum Eingang des jeweils anderen Elements 201 vorgesehen ist. Da ein Stromfluss zwischen zwei Elementen 201 innerhalb des graphischen Diagramms 200 immer von links nach rechts verläuft, können die gerichteten Kanten 303 des Datenflussgraphen 300 ebenfalls eine von links nach rechts verlaufende Richtung aufweisen.

Der Datenflussgraph 300 weist hierbei einen Anfangsknoten 305 und einen Endknoten 307 auf. Die Knoten 301 des Datenflussgraphen 300 können ferner in eine topologische Ordnung gebracht werden und der Datenflussgraph 300 umfasst neben den Anfangsknoten 305 und Endknoten 307, einen ersten Knoten 308, einen zweiten Knoten 309, einen dritten Knoten 310 und einen vierten Knoten 311. Der Datenflussgraph 300 entspricht somit einem azyklischen Graph mit eindeutig identifizierbaren Anfangsknoten 305 und Endknoten 307, die dadurch gekennzeichnet sind, dass mit dem Anfangsknoten 305 nur Kanten 303 verbunden sind, die vom Anfangsknoten 305 weg gerichtet sind, während der Endknoten 307 nur mit Kanten 303 verbunden ist, die zum Endknoten 307 hin gerichtet sind. Es sind auch Datenflussgraphen 300 mit mehreren Endknoten 307 denkbar. Jeder Endknoten 307 ist aber in diesem Fall eindeutig als ein Endknoten identifizierbar. Im gezeigten Datenflussgraph entspricht der Anfangsknoten 305 der linken Spannungsschiene L und der Endknoten 307 der rechten Spannungsschiene R. Der erste Knoten 308 entspricht dem ersten Kontakt E1, der zweite Knoten 309 entspricht dem zweiten Kontakt E2, der dritte Knoten 310 entspricht dem dritten Kontakt E3 und der vierte Knoten 311 entspricht der ersten Spule A1. Die topologische Sortierung der einzelnen Knoten 301 basiert hierbei auf der Entfernung der einzelnen Knoten zum Anfangsknoten 305. Die Entfernung eines Knotens zum Anfangsknoten 305 kann hierbei über eine Anzahl von Knoten 301 definiert sein, die in einer Verbindung über wenigstens eine Kante zwischen dem jeweiligen Knoten und dem Anfangsknoten 305 angeordnet sind. Induktiv kann dem Anfangsknoten 305 eine Entfernung von 0 zugeordnet werden, während jedem weiteren Knoten eine Entfernung als eine Summe von einem Wert 1 und einer maximalen Entfernung der direkt voran angeordneten Knoten zugeschrieben werden kann. Auf den Kanten 303 ist ebenfalls eine topologische Ordnung definiert/gegeben und der Datenflussgraph 300 weist eine erste Kante 313, eine zweite Kante 314, eine dritte Kante 315, eine vierte Kante 316, eine fünfte 317, und eine sechste Kante 318 auf.

Die Anordnung der Knoten 301 innerhalb des Datenflussgraphen 300 entspricht in der gezeigten Darstellung der Anordnung der Elemente 201 innerhalb des graphischen Diagramms 200 und der Datenflussgraph 300 der Graphik C stellt eine eindeutige Repräsentation des graphischen Diagramms 200 der Graphik A dar und weist den identischen Informationsgehalt zum gezeigten graphischen Diagramm 200 auf. Der Datenflussgraph 300 kann abweichend zu der gezeigten Darstellung auch in einer anderen Anordnung dargestellt sein. Sofern die topologische Ordnung des Graphen, bzw. der Knoten und Kanten des Graphen, erhalten bleibt, sind alle möglichen Anordnungen äquivalent und stellen das gleiche graphische Diagramm 200 dar.

Eine textuelle Darstellung des Informationsgehalts des Datenflussgraphen 300 kann wie folgt dargestellt sein:
Struktur 2
Knoten 305: L
Knoten 307: R
Knoten 308: E1
Knoten 309: E2
Knoten 310: E3
Knoten 311: A1
Kante 313: Knoten 305, Knoten 308
Kante 314: Knoten 308, Knoten 309
Kante 315: Knoten 308, Knoten 310
Kante 316: Knoten 310, Knoten 311
Kante 317: Knoten 309, Knoten 311
Kante 318: Knoten 311, Knoten 307

Kanten sind hierbei durch geordnete Paare von Knoten definiert, die durch die jeweilige Kante miteinander verbunden sind. Die Reihenfolge der Knoten innerhalb der geordneten Paare der Kanten stellt die Richtung der gerichteten Kante dar.

In der gezeigten textbasierten Darstellung ist die gesamte Information des Datenflussgraphen 300 dargestellt. Der Informationsgehalt des Datenflussgraphen 300 entspricht dem Informationsgehalt des zugehörigen graphischen Diagramms 200 und der Datenflussgraph 300 stellt eine eindeutige Repräsentation des graphischen Diagramms 200 in Graphik A dar.

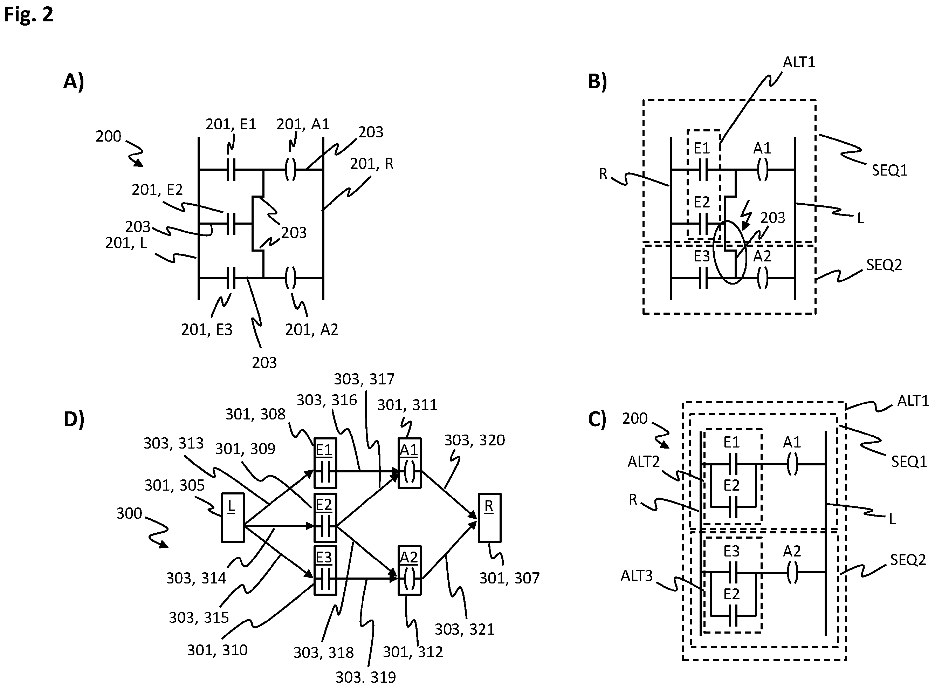

Fig. 2 zeigt eine weitere schematische Darstellung eines weiteren graphischen Diagramms 200 gemäß der Programmiersprache Kontaktplan KOP und eines weiteren Datenflussgraphen 300.

Figur 2 zeigt ein Beispiel eines graphischen Diagramms 200, das gemäß der aus dem Stand der Technik bekannten hierarchischen Struktur nicht darstellbar bzw. lediglich in einer erhöhten Komplexität darstellbar ist. Das gezeigte graphische Diagramm 200 in der Graphik A der Figur 2 ist hingegen durch die erfindungsgemäße Darstellung mittels eines Datenflussgraphen 300 repräsentierbar.

Das in Graphik A dargestellte graphische Diagramm 200 umfasst erste bis dritte Kontakte E1, E2, E3 und erste und zweite Spulen A1, A2, die zwischen linken und rechten Spanungsschienen L, R verschaltet sind. Die ersten und dritten Kontakte E1, E3 sind jeweils in Bezug auf einen Stromfluss zwischen den linken und rechten Spannungsschienen L, R vor den ersten und zweiten Spulen A1, A2 angeordnet, während der zweite Kontakt E2 in Bezug auf den Stromfluss neben den ersten und dritten Kontakten E1, E3 angeordnet ist. In dem gezeigten Diagramm ist der zweite Kontakt E2 ferner sowohl mit der ersten Spule A1 als auch mit der zweiten Spule A2 durch die jeweiligen Verbindungslinien 203 verbunden.

Die Graphik B zeigt analog zu Figur 1 eine dem Vorgehen des Standes der Technik folgende hierarchische Strukturierung des graphischen Diagramms 200 der Graphik A. Die hierarchische Strukturierung in Sequenzen SEQ und Alternativen ALT analog zur Strukturierung in Figur 1 schlägt in dem gezeigten graphischen Diagramm jedoch fehl, da aufgrund der Verbindung des zweiten Kontakts E2 sowohl mit der ersten Spule A1 als auch mit der zweiten Spule A2 keine eindeutige Strukturierung ermöglicht ist, da keine eindeutige Zuordnung des zweiten Kontakts E2 zu einer Sequenz bzw. Alternative auffindbar ist.

In Diagramm B ist eine beispielhafte hierarchische Strukturierung angezeigt, in der das gezeigte graphische Diagramm 200 in eine erste Sequenz SEQ1 und eine zweite Sequenz SEQ 2 und eine erste Alternative ALT1 strukturiert ist. Die erste Sequenz SEQ1 umfasst die erste Alternative ALT1, damit die ersten und zweiten Kontakte E1, E2, und zudem die Spule A1. Die zweite Sequenz SEQ2 umfasst den dritten Kontakt E3 und die zweite Spule A2. Durch die gekennzeichnete Verbindungslinie 203 zwischen dem zweiten Kontakte E2 und der zweiten Spule A2 ist die vorgeschlagene Strukturierung jedoch nicht vollständig, da durch die gekennzeichnete Verbindungslinie 203 der zweite Kontakt E2 ebenfalls Teil der die zweite Spule A2 umfassenden zweiten Sequenz SEQ2 sein müsste. Da im gezeigten Diagramm 200 der zweite Kontakt E2 jedoch lediglich einmal vorkommt, ist eine zweifache Zuordnung des zweiten Kontakts E2 zu zwei verschiedenen Sequenzen bzw. Alternativen nicht möglich.

Graphik C zeigt ein alternatives graphisches Diagramm 200 zu dem Diagramm 200 der Graphik A. Wie oben dargelegt, scheitert die aus dem Stand der Technik bekannte hierarchische Strukturierung in der Darstellung des in Graphik A dargestellten Diagramms 200.

Um dies zu umgehen, zeigt die Graphik C eine alternative Anordnung des Diagramms 200, die den Informationsgehalt des Diagramms 200 aufweist und somit eine funktionelle Alternative zum Diagramm 200 der Graphik A darstellt. Im Diagramm 200 der Graphik C ist abweichend zu den Diagrammen der Graphiken A und B der zweite Kontakt E2 in einer ersten Instanz und einer zweiten Instanz angeführt.

Durch die zweifache Anordnung des zweiten Kontakts E2 ist die erste Instanz des zweiten Kontakts E21 mit der ersten Spule A1 und die zweite Instanz des zweiten Kontakts E2 mit der zweiten Spule A2 verbunden. Darüber hinaus ist die erste Instanz des zweiten Kontakts E2 parallel zum ersten Kontakt E1 angeordnet während die zweite Instanz des zweiten Kontakts E2 parallel zum dritten Kontakt E3 angeordnet. Hierdurch entspricht die alternative Strukturierung des Diagramms 200 der Graphik C sinngemäß dem Diagramm 200 der Graphik A.

Hierdurch ist eine eindeutige hierarchische Strukturierung ermöglicht. Hierzu wird das gezeigte Diagramm 200 in eine erste Alternative ALT1 strukturiert, die eine erste Sequenz SEQ1 und eine zweite Sequenz SEQ2 umfasst. Die erste Sequenz SEQ1 umfasst eine zweite Alternative ALT2, die die parallel zueinander angeordneten ersten und zweiten Kontakte E1, E2 umfasst, und die erste Spule A1. Die zweite Sequenz SEQ2 umfasst eine dritte Alternative ALT3, die die parallel zueinander angeordneten zweiten und dritten Kontakte E2, E3 umfasst, und die zweite Spule A2.

Durch die gezeigte alternative Strukturierung des Diagramms 200 kann somit eine eindeutige hierarchische Struktur bestehend aus Sequenzen und Alternativen ermittelt werden. Darüber hinaus stellt die alternative Strukturierung des Diagramms 200 den Informationsgehalt des graphischen Diagramms 200 der Graphik A dar und ein entsprechendes Steuerprogramm der beiden Diagramme der Graphiken A und C weist jeweils eine identische Funktionsweise auf. Ein Nachteil der alternativen Strukturierung des Diagramms 200 der Graphik C ist jedoch das zweifache Instanziieren des zweiten Kontakts E2. Hierdurch wird das graphische Diagramm 200 gegenüber der Strukturierung der Graphik A komplizierter und weist ein zusätzliches Element 201 auf. Dies wird insbesondere problematisch, wenn anstatt einzelner Elemente komplexer Unterdiagramme vervielfacht werden müssen. Hierdurch kann eine Komplexität des jeweiligen Steuerprogramms basierend auf dem graphischen Diagramm 200 der Graphik C erhöht werden, wodurch ein Rechenaufwand zur Ausführung des jeweiligen Steuerprogramms aufgrund der zusätzlichen Elemente 201, die ausschließlich zur Erfüllung der hierarchischen Strukturierung benötigt werden jedoch keinen zusätzlichen informationellen Beitrag zum graphischen Diagramm leisten, ebenfalls erhöht sein kann.

Die Graphik D zeigt hingegen einen erfindungsgemäßen Datenflussgraph 300 als Repräsentation des graphischen Diagramms 200 der Graphik A. Der Datenflussgraph 300 weist analog zum Datenflussgraph der Figur 1 zwischen den Anfangs- und Endknoten L, R über Kanten 303 miteinander verbundene Knoten 301 auf. Die Knoten entsprechen den Elementen des graphischen Diagramms 200 der Graphik A. Der gezeigte Datenflussgraph umfasst somit die ersten bis dritten Kontakte E1, E2, E3 wie auch die ersten und zweiten Spulen A1, A2, wie in Graphik D zu sehen, ist eine Verdopplung des zweiten Kontakts E2 nicht notwendig. Gemäß dem graphischen Diagramm 200 in Graphik A sind die ersten bis dritten Kontakte E1, E2, E3 jeweils mit dem die linke Spannungsschiene L darstellende Anfangsknoten 305 verbunden. Die ersten und dritten Kontakte E1, E3 sind jeweils mit den ersten und zweiten Spulen A1, A2 verbunden, die jeweils mit dem die rechte Spannungsschiene R repräsentierenden Endknoten 307 verbunden sind. Der zweite Kontakte E2 ist über die gezeigten gerichteten Kanten 303 jeweils mit der ersten Spule A1 und der zweiten Spule A2 verbunden. Wie in Graphik D ersichtlich, ist eine Hinzufügung zusätzlicher Knoten, wie dies in der alternativen Strukturierung des Diagramms 200 der Graphik C benötigt wurde, nicht notwendig. Die Darstellung des Diagramms 200 im Datenflussgraph 300 ermöglicht somit eine vereinfachte Darstellung des Diagramms 200, wobei der Informationsgehalt des Datenflussgraphen 300 dem Informationsgehalt des graphischen Diagramms 200 der ersten Graphik A gleicht. Das durch den Datenflussgraph 300 repräsentierte Steuerprogramm ist somit gegenüber dem durch das graphische Diagramm 200 der Graphik C vereinfacht, da auf eine Redundanz durch eine Verdopplung des zweiten Kontakts E2 verzichtet werden kann. Eine textuelle Darstellung des Informationsgehalts des Datenflussgraphen 300 kann gemäß dem zu Figur 1 gezeigten Beispiel erfolgen.

Durch den dargestellten Datenflussgraph 300, in dem Elemente 201 und Verbindungslinien 203 des graphischen Diagramms 200 durch entsprechende Knoten 301 und gerichtete Kanten 303 repräsentiert sind, ist auch die hierdurch erreichte Flexibilität verdeutlicht. Durch die Repräsentation durch den Datenflussgraphen 300 sind problemlos Änderungen innerhalb des graphischen Diagramms 200 möglich, ohne dass diese aufgrund von Einschränkungen der verwendeten Repräsentation eingeschränkt wären, wie dies beispielsweise im Fall der hierarchischen Struktur problematisch ist. Sollen im graphischen Diagramm 200 Änderungen vorgenommen werden, beispielsweise indem Elemente 201 gelöscht oder hinzugefügt oder Verbindungen zwischen den Elementen 201 geändert werden sollen, können diese Änderungen uneingeschränkt im jeweiligen Datenflussgraph 300 übernommen werden. Da die gerichteten Kanten 303 des Datenflussgraphen 300 als geordnete Paare definiert sind, können beliebig neue Knoten 301 und/oder Kanten 303 hinzugefügt oder bestehenden Knoten 301 und/oder Kanten 303 gelöscht werden, wobei von den Änderungen nicht betroffen Knoten 301 und Kanten 303 unverändert beibehalten werden, und wobei für gewöhnlich das Hinzufügen oder Löschen von Knoten 301 ein entsprechendes Hinzufügen oder Löschen von Kanten 303 mit sich zieht. Dies ermöglicht jegliche Änderungen eines graphischen Diagramms 200 ohne Einschränkungen durch die jeweilige Repräsentation. Eine Zyklenfreiheit des Datenflussgraphen 300 muss bei der Anpassung jedoch jederzeit beibehalten werden.

Die folgenden Strukturen 1,2 beschreiben in textueller Darstellung das graphische Diagramm 200 der Graphik C (Struktur 1) und den Datenflussgraph 300 der Graphik D (Struktur 2).
Struktur 1
Alt1
   SEQ1
      ALT2
         Kontakt E1
         Kontakt E2
      Spule A1
   SEQ2
      ALT3
         Kontakt E2
         Kontakt E3
      Spule A2
Struktur 2
Knoten 305: L
Knoten 307: R
Knoten 308: E1
Knoten 309: E2
Knoten 310: E3
Knoten 311: A1
Knoten 312: A2
Kante 313: Knoten 305, Knoten 308
Kante 314: Knoten 305, Knoten 309
Kante 315: Knoten 305, Knoten 310
Kante 316: Knoten 308, Knoten 311
Kante 317: Knoten 309, Knoten 311
Kante 318: Knoten 309, Knoten 312
Kante 319: Knoten 310, Knoten 312
Kante 320: Knoten 311, Knoten 307
Kante 321: Knoten 312, Knoten 307

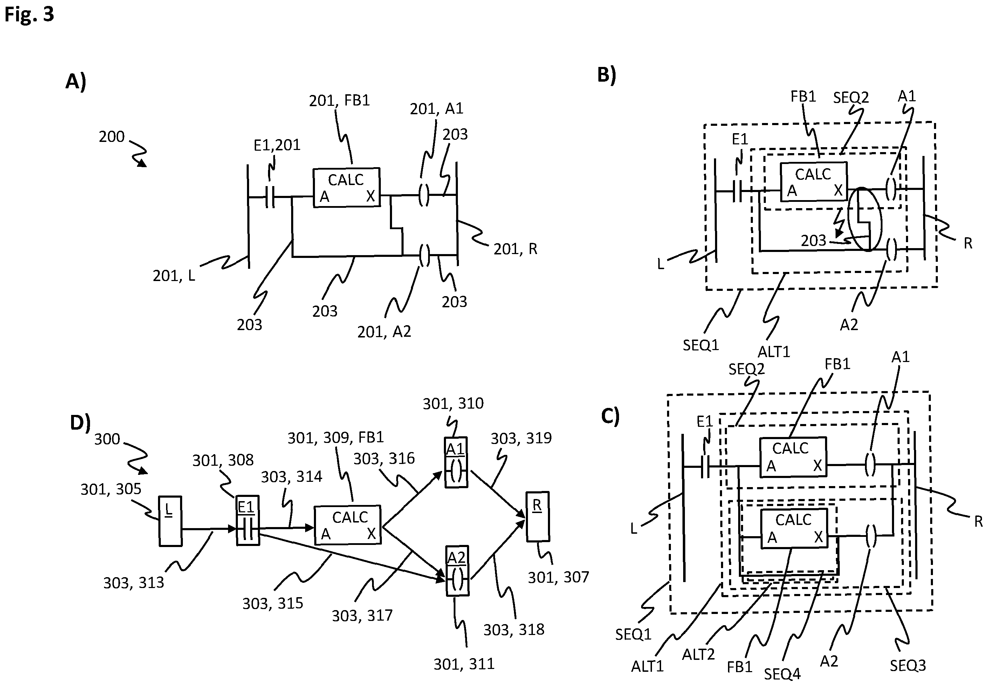

Fig. 3 zeigt eine weitere schematische Darstellung eines weiteren graphischen Diagramms 200 gemäß der Programmiersprache Kontaktplan KOP und eines weiteren Datenflussgraphen 300.

Figur 3 zeigt ein weiteres Beispiel eines graphischen Diagramms 200, das gemäß den Anforderungen der graphischen Programmiersprache Kontaktplan KOP ein gültiges Diagramm ist, das nach den aus dem Stand der Technik bekannten hierarchischen Strukturierungen jedoch in der im Diagramm A gezeigten Form nicht darstellbar ist.

Das Diagramm 200 der Graphik A umfasst einen ersten Kontakt E1, erste und zweite Spulen A1, A2 und einen Aufruf einer ersten Funktionsblockinstanz FB1 eines Funktionsblocks CALC. Die erste Funktionsblockinstanz FB1 kann vom Typ eines beliebigen Funktionsblocks CALC gegeben sein, der über einen ersten Eingang A empfangene Signale entsprechend verarbeitet und über einen ersten Ausgang X entsprechende Funktionsergebnisse ausgibt. Im gezeigten Diagramm 200 ist der Aufruf der ersten Funktionsblockinstanz FB1 über den ersten Ausgang X sowohl mit der ersten Spule A1 als auch der zweiten Spule A2 verbunden. Der erste Kontakt E1 ist sowohl mit dem ersten Eingang A des Aufrufs von der ersten Funktionsblockinstanz FB1, als auch mit der zweiten Spule A2 verbunden.

Die Graphik B zeigt analog zu den Figuren 1 und 2 eine fehlgeschlagene hierarchische Strukturierung des Diagramms 200 der Graphik A. Analog zu der oben diskutierten Problematik des Diagramms der Figur 2 stellt auch beim Diagramm der Figur 3 sowohl die Verbindung des Aufrufs der ersten Funktionsblockinstanz FB1 mit der ersten Spule A1 und der zweiten Spule A2 als auch die Verbindung des ersten Kontakts E1 sowohl mit dem Aufrufs der ersten Funktionsblockinstanz FB1 als auch der zweiten Spule A2 eine Problematik zur eindeutigen Strukturierung in Sequenzen und Alternativen gemäß der aus dem Stand der Technik bekannten hierarchischen Strukturierung dar. In der gezeigten Strukturierung ist das Diagramm 200 in eine erste Sequenz SEQ1, eine zweite Sequenz SEQ2 und eine erste Alternative ALT1 strukturiert, wobei die erste Sequenz SEQ1 den ersten Kontakt E1 und die erste Alternative ALT1 umfasst, die wiederum die zweite Sequenz SEQ2 und die zweite Spule A2 umfasst, wobei die zweite Sequenz SEQ2 den Aufruf der ersten Funktionsblockinstanz FB1 und die ersten Spule A1 umfasst. Mit der gezeigten Verbindungslinie 203 zwischen dem ersten Funktionsblock FB1 und der zweiten Spule A2 ist jedoch eine eindeutige Zuordnung insbesondere des Aufrufs der ersten Funktionsblockinstanz FB1 zu einer Sequenz bzw. einer Alternative nicht möglich.

Analog zu dem Beispiel in Figur 2 ist in der Graphik C eine alternative Strukturierung zu dem Diagramm 200 der Graphik A dargestellt. Das Diagramm 200 der Graphik C stellt hierbei den gleichen Informationsgehalt zu dem Diagramm 200 der Graphik A dar, so dass die Funktionsweise der auf den jeweils verschiedenen Diagrammen 200 der Graphiken A und C basierenden Steuerprogramme scheinbar gleich ist. Der Funktionsblock CALC ist in diesem Zusammenhang als seiteneffektfrei anzusehen. Analog zum Beispiel in Figur 2 ist in der alternativen Struktur des Diagramms 200 der Graphik C die zuvor beschriebene nicht eindeutige Zuweisung des ersten Funktionsblocks FB1 dadurch gelöst, dass der erste Funktionsblock FB1 in der alternativen Strukturierung zweifach im Diagramm 200 angeordnet ist.

Das zweifache Anordnen des Aufrufs der ersten Funktionsblockinstanz FB1 in der alternativen Struktur des graphischen Diagramms 200 der Graphik C ist nicht mit einem Hinzufügen einer zusätzlichen Funktionsblockinstanz zum Steuerprogramm zu verwechseln. Stattdessen ist das zweifache Anordnen des Aufrufs der ersten Funktionsblockinstanz FB1 im graphischen Diagramm 200 mit dem zweifachen Ausführen des Verhaltens des Funktionsblocks CALC auf der Funktionsblockinstanz FB1 innerhalb des dazugehörigen Steuerprogramms zu verstehen.

In dem gezeigten Diagramm 200 der Graphik C ist der Aufruf der ersten Funktionsblockinstanz FB1 in zweifacher Ausführung jeweils mit dem ersten Kontakt E1 und sowohl einmal mit der ersten Spule A1 als auch einmal mit der zweiten Spule A2 verbunden. Die beiden Aufrufe der ersten Funktionsblockinstanz FB1 sind hierbei analog zu den ersten und zweiten Spulen A1, A2 in Bezug auf den Stromfluss nebeneinander angeordnet. Darüber hinaus ist der erste Kontakt E1 mit der zweiten Spule A2 verbunden. Das gezeigte Diagramm entspricht somit scheinbar sinngemäß dem Diagramm 200 der Graphik A und stellt somit scheinbar lediglich eine alternative Strukturierung desselben Steuerprogramms dar. In dem gezeigten Diagramm 200 ist durch die zweifache Anordnung des Aufrufs der ersten Funktionsblockinstanz FB1 eine eindeutige hierarchische Strukturierung in Sequenzen und Alternativen ermöglicht. Das Diagramm kann somit in eine erste Sequenz SEQ1 strukturiert werden, die den ersten Kontakt E1 und eine erste Alternative ALT1 umfasst. Die erste Alternative ALT1 umfasst wiederum zwei parallel zueinander angeordneten Sequenzen SEQ2, SEQ3, die zweite Sequenz SEQ2 umfasst hierbei eine Aufruf der ersten Funktionsblockinstanz FB1 und die erste Spule A1, während die dritte Sequenz SEQ3 eine zweite Alternative ALT2 und die zweite Spule A2 umfasst. Die zweite Alternative ALT2 umfasst wiederum den duplizierten Aufruf der ersten Funktionsblockinstanz FB1 und eine parallel angeordnete vierte Sequenz SEQ4, die selber keine weiteren Elemente sondern eine parallel zum den duplizierten Aufruf der ersten Funktionsblockinstanz FB1 angeordnete Verbindungslinie umfasst. Durch die zweifache Anordnung des Aufrufs der ersten Funktionsblockinstanz FB1 wird beim Ausführen des dazugehörigen Steuerprogramms der Funktionsblock CALC des Aufrufs der ersten Funktionsblockinstanz FB1 zweifach ausgeführt. Hierdurch kann ein erhöhter Rechenaufwand entstehen, der auf der Verdopplung des ersten Funktionsblocks FB1 beruht, der ausschließlich benötigt wurde, um die hierarchische Strukturierung zu ermöglichen, jedoch keinen informationellen Mehrwert für das Steuerprogramm darstellt. Zudem kann das Verhalten des Steuerungsprogramms tatsächlich abweichen, falls die Ausführung des Verhaltens einen Seiteneffekt hat, also den Zustand des Steuerungsprogramms ändert. Inkrementiert das Verhalten zum Beispiel eine globale Variable X des Steuerungsprogramms, würde sich Ihr Wert nach Ausführung von B) und C) unterscheiden. Übliche Funktionsbausteine mit einem Seiteneffekt sind R_TRIG und F_TRIG der IEC61131-3 zur Flankenerkennung. Eine Duplizierung der Aufrufe der Instanzen dieser FBs ändert also indirekt das Verhalten des Programms.

Die Graphik D zeigt eine erfindungsgemäße Repräsentation des graphischen Diagramms 200 in einem entsprechenden Datenflussgraph 300. Der Datenflussgraph 300 umfasst alle Elemente des Diagramms 200 in Graphik A und eine doppelte Ausführung des ersten Funktionsblocks FB1 kann vermieden werden. Hierzu ist der erste Kontakt E1 über eine gerichtete Kante sowohl mit dem ersten Eingang A des ersten Funktionsblocks FB1 verbunden. Über eine weitere gerichtete Kante ist der erste Kontakt E1 ferner mit der zweiten Spule A2 verbunden. Der erste Funktionsblock FB1 ist über den ersten Ausgang X über eine gerichtete Kante mit der ersten Spule A1 verbunden und über eine weitere gerichtete Kante mit der zweiten Spule A2. Hierdurch ist eine mehrfache Ausführung des Funktionsblocks CALC des ersten Funktionsblocks FB1, wie dies in der Struktur der Graphik C benötigt war, nicht notwendig. Die gerichteten Kanten 303 ermöglichen somit eine eindeutige Zuordnung der einzelnen Knoten 301 zueinander, ohne dass zur Gewährleistung der Eindeutigkeit zusätzliche Knoten 301 in den Graph eingefügt werden müssen. Hierdurch kann eine Komplexität des Steuerprogramms und gegebenenfalls ein benötigter Rechenaufwand zum Ausführen des Steuerprogramms reduziert werden. Außerdem weicht das Verhalten im Falle eines Seiteneffekt-behafteten Funktionsblocks CALC nicht zwischen A) und D) ab.

Die folgenden Strukturen 1,2 beschreiben in textueller Darstellung das graphische Diagramm 200 der Graphik C (Struktur 1) und den Datenflussgraph 300 der Graphik D (Struktur 2).
Struktur 1
   SEQ1
   Kontakt E1
   ALT1
      SEQ2
         ALT2
            Funktionsblock FB1
            SEQ4
         Spule A1
      SEQ3
         Funktionsblock FB1
         Spule A2
Struktur 2
Knoten 305: L
Knoten 307: R
Knoten 308: E1
Knoten 309: FB1
Knoten 310: A1
Knoten 311: A2
Kante 313: Knoten 305, Knoten 308
Kante 314: Knoten 308, Knoten 309
Kante 315: Knoten 308, Knoten 311
Kante 316: Knoten 309, Knoten 310
Kante 317: Knoten 309, Knoten 311
Kante 318: Knoten 311, Knoten 307
Kante 319: Knoten 310, Knoten 307

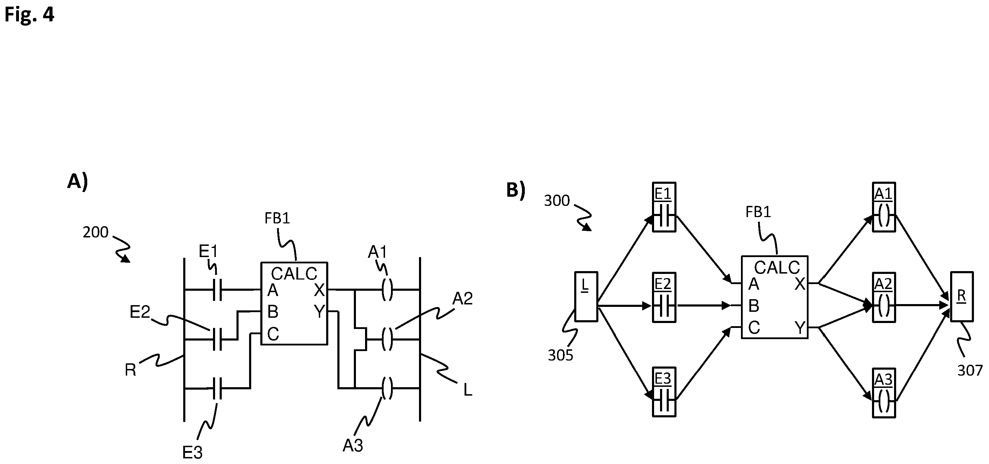

Fig. 4 zeigt eine weitere schematische Darstellung eines weiteren graphischen Diagramms 200 gemäß der Programmiersprache Kontaktplan KOP und eines weiteren Datenflussgraphen 300.

Das in Figur 4 gezeigte Beispiel eines graphischen Diagramms ist wiederum gemäß den Regeln der graphischen Programmiersprache Kontaktplan KOP zulässig jedoch den Strukturierungsregeln des Standes der Technik folgend, ähnlich zu den Beispielen in Figur 2 und 3, nicht darstellbar. Das in der Graphik A dargestellte Diagramm 200 umfasst neben den linken und rechten Spannungsschienen L, R erste bis dritte Kontakte E1, E2, E3, erste bis dritte Spulen A1, A2, A3 und einen Aufruf einer ersten FunktionsblockinstanzFB1 mit einem auszuführenden Funktionsblock CALC. Die ersten bis dritten Kontakte E1, E2, E3 sind relativ zum Stromfluss jeweils parallel zueinander angeordnet und jeweils mit einem ersten Eingang A, einem zweiten Eingang B oder einem dritten Eingang C des Aufrufs der ersten Funktionsblockinstanz FB1 verbunden. Die ersten bis dritten Spulen A1, A2, A3 sind ebenfalls nebeneinander zueinander angeordnet, wobei die erste Spule A1 mit einem ersten Ausgang X des Aufrufs der ersten Funktionsblockinstanz FB1 verbunden ist und die dritte Spule A3 mit einem zweiten Ausgang Y des Aufrufs der ersten Funktionsblockinstanz FB1 verbunden ist. Die zweite Spule A2 ist sowohl mit dem ersten Ausgang X als auch dem zweiten Ausgang Y des Aufrufs der ersten Funktionsblockinstanz FB1 verbunden. Analog zu den zu Figuren 2 und 3 gezeigten Beispielen ist aufgrund der zweifachen Verbindung der zweiten Spule A2 mit den ersten und zweiten Ausgängen X, Y des Aufrufs der ersten Funktionsblockinstanz FB1 das Diagramm 200 der Graphik A gemäß der hierarchischen Struktur nicht eindeutig in Sequenzen und Alternativen strukturierbar. Darüber hinaus verhindern die Mehrzahl von Eingängen und Ausgängen des ersten Funktionsblocks FB1 eine eindeutige Repräsentation des Diagramms 200 in entsprechenden hierarchischen Strukturen.

Entgegen den Beispielen zu Figuren 2 und 3 ist in Fig. 4 keine alternative Darstellung gezeigt. Eine derartige alternative Darstellung ist für das in Fig. 4 gezeigte graphische Diagramm 200 nicht ohne eine Reihe von Modifikationen möglich. Das in Graphik A dargestellte graphische Diagramm 200, das gemäß den Regeln der Sprache Kontaktplan KOP ein zulässiges graphisches Diagramm darstellt, lässt sich ohne Modifikationen, beispielsweise zusätzliche Boolesche Operatoren an den Eingängen A, B, C des ersten Funktionsblocks FB1, in einer hierarchischen Strukturierung darstellen.

Eine Darstellung als ein Datenflussgraph ist wie in Graphik B gezeigt aber problemlos möglich.

Abweichend zu Beispielen der Figuren 1 bis 3 ist wird im Folgenden von einer erneuten Beschreibung eines alternativen graphischen Diagramms 200 und der entsprechenden hierarchischen Struktur abgesehen. Stattdessen zeigt Graphik B einen erfindungsgemäßen Datenflussgraph 300 zum graphischen Diagramm 200 der Graphik A.

Der Datenflussgraph 300 ist geeignet, das Diagramm 200 der Graphik A eindeutig zu repräsentieren, ohne dass hierzu zusätzliche Elemente bzw. Knoten eingefügt werden müssten. Der Datenflussgraph 300 umfasst somit ausschließlich die Elemente des Diagramms 200 der Graphik A und alle Elemente sind jeweils ausschließlich einfach im Datenflussgraph 300 angeführt.

Die ersten bis dritten Kontakte E1, E2, E3 sind jeweils mit dem Anfangsknoten 305 und den ersten bis dritten Anschlüssen A, B, C des Aufrufs der ersten Funktionsblockinstanz FB1 verbunden. Die ersten bis dritten Spulen A1, A2, A3 sind jeweils einfach mit dem Endknoten 307 verbunden, wobei die erste Spule A1 mit dem ersten Ausgang X und die dritte Spule A3 mit dem zweiten Ausgang Y des ersten Funktionsblocks FB1 verbunden sind. Die zweite Spule A2 ist hingegen sowohl mit dem ersten als auch dem zweiten Ausgang X, Y des Aufrufs der ersten Funktionsblockinstanz FB1 verbunden. Hierdurch ist eine gegenüber dem Stand der Technik vereinfachte Darstellung des Diagramms 200 der Graphik A ermöglicht, wobei der vollständige Informationsgehalt des Diagramms 200 durch den Datenflussgraph 300 eindeutig dargestellt ist.

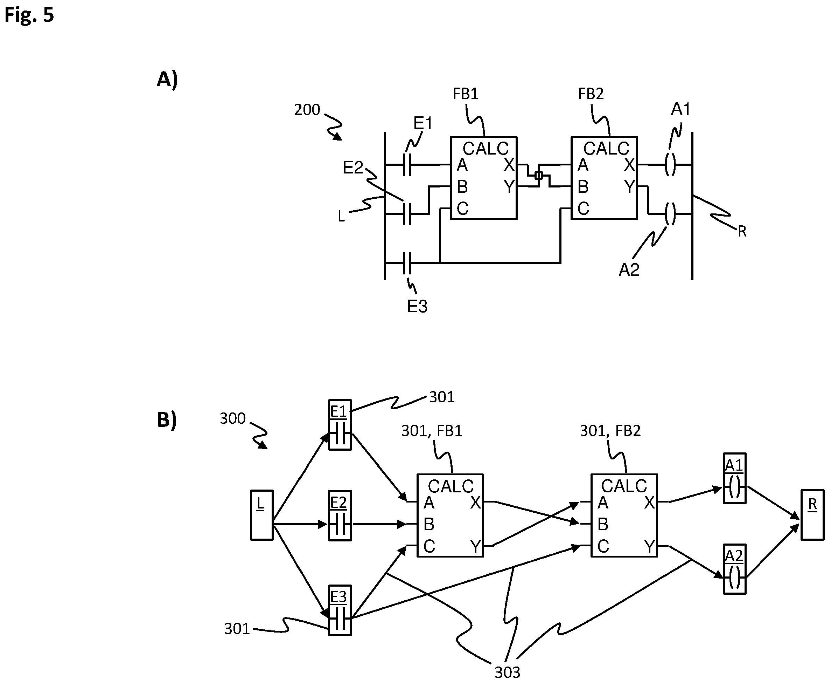

Fig. 5 zeigt eine weitere schematische Darstellung eines weiteren graphischen Diagramms 200 gemäß der Programmiersprache Kontaktplan KOP und eines weiteren Datenflussgraphen 300.

Figur 5 zeigt ein weiteres Beispiel eines gemäß den Regeln der graphischen Programmiersprache Kontaktplan KOP zulässigen graphischen Diagramms 200, das jedoch gemäß den Strukturierungsregeln des Standes der Technik nicht eindeutig darstellbar ist.

Das Diagramm 200 der Graphik A umfasst erste bis dritte Kontakte E1, E2, E3, einen Aufruf einer ersten Funktionsblockinstanz FB1, einen Aufruf einer zweiten Funktionsblockinstanz FB2 und erste und zweite Spulen A1, A2. Die ersten bis dritten Kontakte E1, E2, E3 sind in Bezug auf den Stromfluss nebeneinander angeordnet und jeweils einfach mit ersten bis dritten Anschlüssen A, B, C des Aufrufs der ersten Funktionsblockinstanz FB1 verbunden. Die ersten bis zweiten Spulen A1, A2 sind jeweils nebeneinander angeordnet und mit ersten bis zweiten Ausgängen X, Y des Aufrufs der zweiten Funktionsblockinstanz FB2 verbunden. Die Aufrufe der ersten und zweiten Funktionsblockinstanzen FB1, FB2 sind jeweils miteinander verbunden, indem der erste Ausgang X des Aufrufs der ersten Funktionsblockinstanz FB1 mit dem zweiten Eingang B des Aufrufs der zweiten Funktionsblockinstanz FB2 und der zweite Ausgang Y des Aufrufs der ersten Funktionsblockinstanz FB1 mit dem ersten Eingang A des Aufrufs der zweiten Funktionsblockinstanz FB2 verbunden sind. Darüber hinaus ist der dritte Kontakt E3 mit dem dritten Eingang C des Aufrufs der zweiten Funktionsblockinstanz FB2 verbunden. Auch aufgrund der überkreuz angeordneten Verbindung der Aufrufe der ersten und zweiten Funktionsblockinstanzen FB1, FB2 miteinander ist eine gemäß den Regeln der hierarchischen Strukturierung des Standes der Technik folgende Strukturierung des Diagramms 200 in Sequenzen und Alternativen nicht eindeutig möglich. Den oben genannten Beispielen folgend müsste hierzu somit eine alternative Struktur des Diagramms 200 erstellt werden, indem mehrfache Anordnungen der Aufrufe der ersten und/oder zweiten Funktionsblockinstanzen FB1, FB2 ausgeführt sind. Da jeder Aufruf der zweiten Funktionsblockinstanz FB2 jedoch Werte für die Anschlüsse A, B und C benötigen würde, müssten für eine hierarchische Strukturierung Hilfsvariablen eingeführt werden. Eine derartige Verbindung wäre mit den graphischen Mitteln der Sprache Kontaktplan KOP somit nicht ausdrückbar, worunter eine Lesbarkeit des Diagramms leiden würde. Durch die zweifache Anordnung der genannten Elemente wird eine Komplexität des graphischen Diagramms und des dazugehörigen Steuerprogramms erhöht. Darüber hinaus wird durch das mehrfache Anordnen der Aufrufe der Funktionsblockinstanzen FB1, FB2 eine mehrfache Ausführung des Funktionsblocks CALC der Funktionsblockinstanzen FB1, FB2 während der Ausführung des jeweiligen Steuerprogramms bewirkt. Hierdurch müssen zusätzliche Rechenschritte während der Ausführung des Steuerprogramms durchgeführt werden, die ausschließlich auf der einschränkenden hierarchischen Strukturierung zur Repräsentation des graphischen Diagramms hervorgerufen ist und somit unnötig eine zur Durchführung des Steuerprogramms benötigte Rechenkapazität erhöht.

Alternativ hierzu ist in der Graphik B eine Repräsentation des graphischen Diagramms 200 gemäß einem erfindungsgemäßen Datenflussgraphen 300 dargestellt. Der Datenflussgraph 300 umfasst hierbei ausschließlich die Elemente des graphischen Diagramms 200 der Graphik A und zusätzliche bzw. mehrfache Ausführungen der Elemente sind nicht notwendig. Durch die Verbindung der einzelnen Knoten 301 des Datenflussgraphs 300 mit einzelnen gerichteten Kanten 303 können beliebige Verbindungen der einzelnen Knoten realisiert werden. Unter anderem kann die überkreuz gelagerte Verbindung der ersten und zweiten Funktionsblockinstanzen FB1, FB2 problemlos durch entsprechend gerichtete Kanten 303, die jeweils zwischen den ersten und zweiten Ausgängen X, Y des Aufrufs der ersten Funktionsblockinstanz FB1 und den entsprechenden ersten und zweiten Eingängen A, B, des Aufrufs der zweiten Funktionsblockinstanz FB2 verlaufen. Darüber hinaus kann der dritte Kontakt E3 problemlos über zwei getrennte gerichtete Kanten sowohl einmal mit dem dritten Eingang C des Aufrufs der ersten Funktionsblockinstanz FB1 und einmal mit dem dritten Eingang C des Aufrufs der zweiten Funktionsblockinstanz FB2 verbunden werden. Da der erfindungsgemäße Datenflussgraph nicht den hierarchischen Strukturierungen des Standes der Technik unterworfen ist, sind daher mehrfache Ausführungen der Elemente, wie dies in den oben gezeigten Beispielen des Standes der Technik benötigt wird, nicht notwendig. Eine eindeutige textuelle Darstellung gemäß dem zu Figur 1 gezeigten Beispiel kann erfolgen, indem eine topologische Sortierung der einzelnen Knoten und eine eindeutige Zuordnung der Kanten 303 als geordnete Paare der durch die jeweiligen Kanten 303 verbundenen Knoten 301 durchgeführt wird.

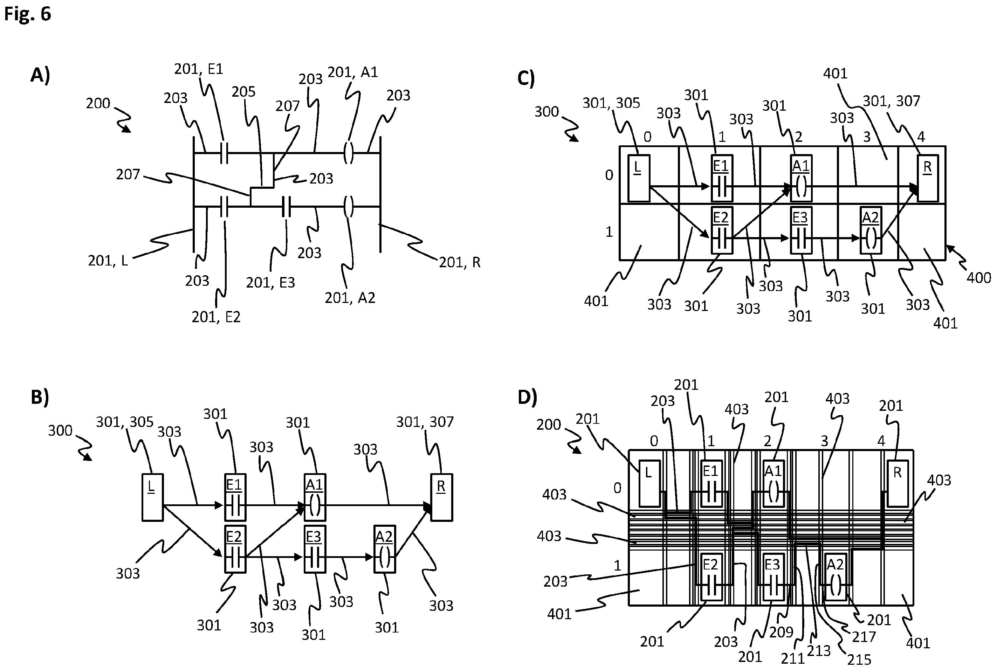

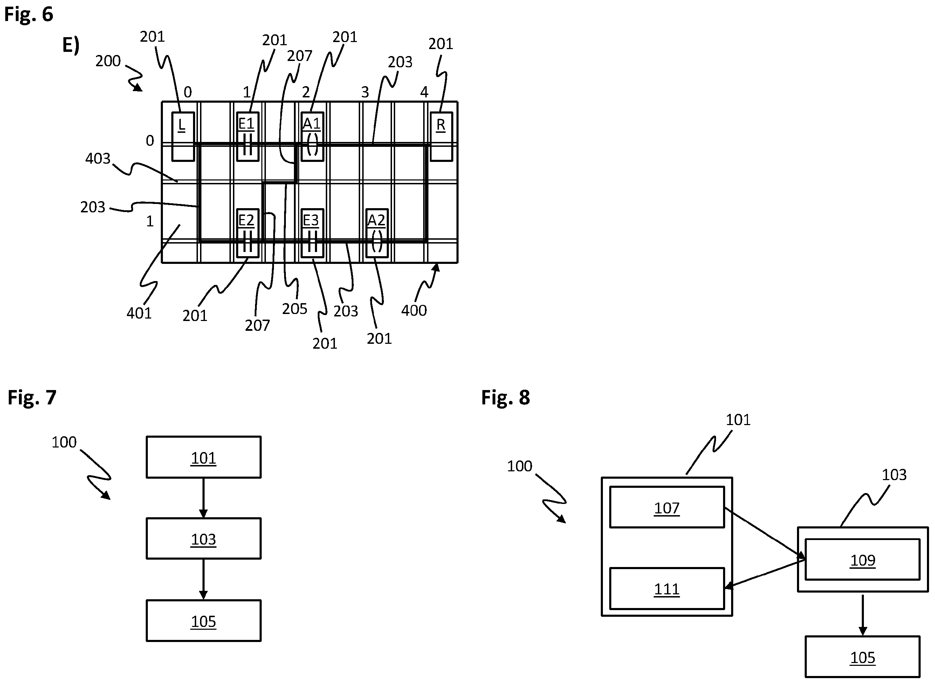

Fig. 6 zeigt eine schematische Darstellung eines Verfahrens zum Erzeugen eines Steuerprogramms zum Steuern eines Automatisierungssystems gemäß einer Ausführungsform.

Figur 6 zeigt in graphischer Darstellung eine Ausführung des erfindungsgemäßen Verfahrens zum Erzeugen eines Steuerprogramms zum Steuern eines Automatisierungssystems. Figur 6 zeigt anhand der verschiedenen Graphiken A bis E wie gemäß dem erfindungsgemäßen Verfahren, basierend auf einem Datenflussgraphen, durch Ausführung verschiedener Verfahrensschritte eine entsprechende gleichbedeutende Darstellung gemäß KOP eines dazugehörigen graphischen Diagramms erfolgt. In den folgenden Ausführungen wird die in den Figuren 1 bis 5 eingeführte Nomenklatur sowohl bzgl. der graphischen Diagramme als auch der Datenflussgraphen verwendet und eine erneute Erklärung erfolgt im Folgenden nicht.

Analog zu den Beispielen zu Figuren 1 bis 5 wird auch die graphische Erläuterung des erfindungsgemäßen Verfahrens auf einem beliebigen Beispiel vorgenommen, das nicht zur Einschränkung der vorliegenden Erfindung dienen soll. Wie oben bereits dargelegt, ist die erfindungsgemäße Repräsentation der graphischen Diagramme durch erfindungsgemäße Datenflussgraphen nicht den aus dem Stand der Technik bekannten Einschränkungen unterworfen. Die im Folgenden anhand des beispielhaften graphischen Diagramms 200 der Graphik A der Figur 6 beschriebenen Maßnahmen zum Erzeugen eines Steuerprogramms gemäß dem erfindungsgemäßen Verfahren kann somit auf beliebige graphische Diagramme angewendet werden, die gemäß den Regeln der graphischen Programmiersprache Kontaktplan KOP zulässig sind.

In dem gezeigten Beispiel umfasst das graphische Diagramm 200 der Graphik A erste bis dritte Kontakte E1, E2, E3 sowie erste und zweite Spulen A1, A2, die zwischen linken und rechten Spannungsschienen L, R, angeordnet sind. Der erste Kontakt E1 und die erste Spule A1 sind jeweils in Bezug auf den Stromfluss hintereinander angeordnet, während der zweite Kontakt E2, der dritte Kontakt E3 und die zweite Spule A2 jeweils in Bezug auf den Stromfluss hintereinander zueinander angeordnet sind. Mittels einer weiteren Verbindungslinie 203 ist ferner der zweite Kontakt E2 mit der ersten Spule A1 verbunden. Das in Graphik A dargestellte Diagramm 2 stellt in der folgenden Ausführung ein zu erzielendes graphisches Diagramm dar, das durch Ausführung des erfindungsgemäßen Verfahrens zu erzeugen ist. Dies kann beispielsweise basierend auf entsprechenden graphischen Eingabeaufforderungen während eines graphischen Programmiervorgangs erfolgen. Alternativ hierzu kann das gewünschte graphische Diagramm 200 durch Einlesen eines bereits bestehenden graphischen Diagramms und durch entsprechende Umwandlungsschritte, die im Folgenden ausgeführt werden, erzeugt werden.

Zum Erzeugen des Steuerprogramms wird zunächst ein Datenflussgraph 300 basierend auf entweder den graphischen Programmieraufforderungen oder den eingelesen, textuellen Informationen des bereits bestehenden Steuerprogramms erstellt. Gemäß den Ausführungen zu den Figuren 1 bis 5 umfasst der Datenflussgraph 300 einen Anfangsknoten 305, einen Endknoten 307 und eine Mehrzahl dazwischen angeordneter Knoten 301, die jeweils über entsprechende Kanten 303 miteinander verbunden sind. Der gezeigte Datenflussgraph 300 umfasst hierbei alle zur Darstellung des gewünschten graphischen Diagramms 200 benötigten Elemente und umfasst die ersten bis dritten Kontakte E1, E2, E3 und die ersten und zweiten Spulen A1, A2. Der erste Kontakt E1 ist hierbei seriell mit der ersten Spule A1 verbunden, während der zweite Kontakt E2 seriell mit dem dritten Kontakt E3 verbunden ist, der wiederum seriell mit der zweiten Spule A2 verbunden ist, wobei der zweite Kontakt E2 ferner mit der ersten Spule A1 verbunden ist.

Die Erzeugung des Datenflussgraphen 300 kann gemäß den graphischen Programmieraufforderungen erfolgen, in denen das Hinzufügen bzw. Entfernen verschiedener Elemente des gewünschten graphischen Diagramms 200 durchgeführt werden. Hierzu können jedem Element 201 und jeder Verbindungslinie 203 des graphischen Diagramms 200 entsprechend ein Knoten 301 und eine Kante 303 des Datenflussgraphen 300 zugeordnet werden. Die Kanten 303 verlaufen hierbei jeweils von einem Ausgang eines Knotens 303 zu einem Eingang eines weiteren Knotens 303 und sind jeweils in einer Richtung ausgehend vom Anfangsknoten 305 in Richtung des Endknotens 307 gerichtet. Eine Kante 303 wird genau dann erstellt, wenn im graphischen Diagramm 200 eine entsprechende Verbindungslinie von einem Ausgang eines entsprechenden Elements 201 zum Eingang eines weiteren Elements 201 verläuft und hierüber ein direkter Stromfluss zwischen den beiden Elementen 201 in Richtung der rechten Spannungsleiste R verlaufen kann. Die entsprechenden graphischen Programmieraufforderungen können hierbei unmittelbar in entsprechende Modifikationen des Datenflussgraphen 300 überführt werden, indem Knoten 301 und/oder Kanten 303 entsprechend entfernt oder hinzugeführt werden. Alternativ hierzu kann der Datenflussgraph 300 basierend auf einer textuellen Darstellung gemäß der in Figur 1 angeführten Beispiele erzeugt werden. Hierzu können beispielsweise die textuellen Darstellungen gemäß dem Stand der Technik, in denen eine hierarchische Strukturierung in Sequenzen und Alternativen vorgenommen ist, in entsprechende textuelle Darstellungen überführt werden, in denen die einzelnen Elemente als Knoten und die Verbindungslinien als gerichtete Kanten des Datenflussgraphen dargestellt sind. Die textuelle Darstellung eines Datenflussgraphen 300 kann auch unmittelbar in einen entsprechenden Datenflussgraph überführt werden, durch Anlegen der Knoten 303 und der Kanten 303.

Gemäß einem weiteren Verfahrensschritt kann eine topologische Sortierung mit Tiefenbestimmung der Knoten des Datenflussgraphen 300 vorgenommen werden und der Datenflussgraph bzw. die Knoten 301 des Datenflussgraphen 300 wie in Graphik C in einer zweidimensionalen Anordnung 400 angeordnet werden, wobei jeder Knoten 301 in einer entsprechenden Parzelleneinheit 401 der zweidimensionalen Anordnung 400 angeordnet ist, wobei die Anordnung 400 gitterförmig ausgebildet sein kann. Ein Knoten der Entfernung i wird dabei in der j-ten Spalte mit j>=i angeordnet. Die Tiefe eines Knotens 301 beschreibt hierbei eine Anzahl von Knoten 301, die zwischen dem Anfangsknoten 305 und dem jeweiligen Knoten 301 über eine entsprechende Verbindung zu beiden angeordnet sind. Die topologische Sortierung, in der eine Reihenfolge der Knoten des Datenflussgraphen 300 bestimmt wird, basiert jeweils auf der Entfernung der einzelnen Knoten 301 zum Anfangsknoten 305 des Datenflussgraphen. Durch die topologische Sortierung des Datenflussgraphen 300 für bzw. über jeden Knoten 301 ein Pfad ausgehende vom Anfangsknoten 305 zum Endknoten 307 gefunden werden, bei dem keine der gerichteten Kanten 303 des Pfads in Richtung des Anfangsknoten 305 gerichtet sind bzw. in dieser Richtung durchlaufen werden.

In einem weiteren Verfahrensschritt wird darauffolgend der Datenflussgraph 300 der Graphik C in ein entsprechendes graphisches Diagramm 200 überführt, das in Graphik D dargestellt ist. Hierbei werden alle Knoten 301 des Datenflussgraphen 300 in entsprechende Elemente 201 des graphischen Diagramms 200 überführt, wobei die als Gitter ausgebildete Anordnung 400 und die Lage der Knoten 301 innerhalb dieser übernommen werden. Darüber hinaus werden die gerichteten Kanten 303 des Datenflussgraphen 300 in entsprechende Verbindungslinien 203 des graphischen Diagramms 200 überführt, wobei die Verbindungslinien 203 ausschließlich horizontale bzw. vertikale Komponenten aufweisen. Die Verbindungslinien 203 werden hierbei derart angeordnet, dass durch diese jene Elemente 201 verbunden werden, deren entsprechende Knoten 301 durch gerichtete Kanten 303 des Datenflussgraphen 300 verbunden sind. Die einzelnen Elemente 201 des graphischen Diagramms werden hierbei jeweils in einzelne Parzelleneinheiten 401 der zweidimensionalen Anordnung 400 angeordnet. Die aus horizontalen bzw. vertikalen Komponenten bestehenden Verbindungslinien 203 werden ferner auf Trennlinien 403 der zweidimensionalen Anordnung 400, durch die angrenzende Parzelleneinheiten 401 voneinander getrennt werden, angeordnet.

In der gezeigten Ausführungsform weist jede Verbindungslinie 203 jeweils eine horizontale Ausgangskomponente 209, eine erste vertikale Komponente 211, eine horizontale Mittelkomponente 213, eine zweite vertikale Komponente 215 und eine horizontale Eingangskomponente 217 auf. In Graphik D sind die entsprechenden Komponenten aus Gründen der Übersichtlichkeit ausschließlich für die Verbindungslinie zwischen dem dritten Kontakt E3 und der zweiten Spule A2 mit entsprechenden Bezugszeichen versehen. Die horizontale Ausgangskomponente 209 ist hierbei mit dem Ausgang des dritten Kontakts E3 verbunden, während die horizontale Eingangskomponente 217 mit dem Eingang der zweiten Spule A2 verbunden ist. Die ersten und zweiten vertikalen Komponenten 211, 215 sind jeweils auf einer vertikalen Trennlinie 403 der zweidimensionalen Anordnung 400 angeordnet. Die horizontale Mittelkomponente 213 ist wiederum auf einer horizontalen Trennlinie 403 der zweidimensionalen Anordnung 400 angeordnet.

In der gezeigten Ausführungsform umfasst die zweidimensionale Anordnung 400 eine Mehrzahl von horizontalen Trennlinien 403, die jeweils in einem Mittelbereich der zweidimensionalen Anordnung 400 angeordnet sind und zwei übereinander angeordnete Zeilen von Parzelleneinheiten 401 trennen. In der gezeigten Ausführungsform weist die zweidimensionale Anordnung 400 acht horizontale Trennlinien 403 auf, sodass für jede der acht Verbindungslinien 203 eine horizontale Trennlinie 403 zur Verfügung steht. Die horizontalen Mittelkomponenten 213 der acht verschiedenen Verbindungslinien 203 können individuell auf einer horizontalen Trennlinie 403 angeordnet werden. Zusätzlich weist die zweidimensionale Anordnung 400 eine Mehrzahl von vertikalen Trennlinien 403 auf, sodass die ersten und zweiten vertikalen Komponenten 211, 215 der verschiedenen Verbindungslinien 203 exklusiv auf einer senkrechten Trennlinie 403 angeordnet werden können.

Alternativ zu der Graphik D können für anders gestaltete graphische Diagramme 200 bzw. anders strukturierte Datenflussgraphen 300 entsprechend anders ausgestaltete zweidimensionale Anordnungen 400 generiert werden. Diese können beispielsweise eine Mehrzahl von übereinander angeordneten Zeilen von Parzelleneinheiten 401 aufweisen und verschiedene Anzahlen von vertikalen und horizontalen Trennlinien 403 umfassen.

Alternativ können die Knoten 301 nach anderen Verfahren platziert werden, wobei gelten muss, dass bei einer Kante 303 zwischen zwei Knoten 301 der Ausgang des voranstehenden Knotens 301 links vom Eingang des nachfolgenden Knotens 301 liegt.

In einem weiteren Verfahrensschritt wird darauffolgend basierend auf der Anordnung 400 der Graphik D eine Optimierung durchgeführt, in der Abstände zwischen Elementen 201 und/oder Längen von Verbindungslinien 203 minimiert und/oder Überkreuzungen von Verbindungslinien 203 vermieden werden. Graphik E zeigt das aus der Optimierung resultierende graphische Diagramm 200. Gegenüber dem graphischen Diagramm 200 der Graphik D sind insbesondere die Längen der Verbindungslinien 203 reduziert. Verbindungslinien 203, die Elemente 201 jeweils von einem Eingang eines Elements 201 zu einem Ausgang des jeweils anderen Elements 201 miteinander verbinden, die innerhalb der gleichen Zeile von Parzelleneinheiten 401 angeordnet sind, sind im Zuge der Optimierung zu geradlinigen horizontalen Verbindungslinien 203 reduziert, indem die ersten und zweiten vertikalen Komponenten 211, 215 auf null reduziert sind. Analog wurde für die Verbindungslinie zwischen der linken Spannungsschiene L und dem zweiten Kontakt E2 die zweite vertikale Komponente 215 auf null reduziert, während für die Verbindungslinie 203 zwischen der zweiten Spule A2 und der rechten Spannungsschiene R die erste vertikale Komponente 211 auf null reduziert wurde. Das derart optimierte graphische Diagramm 200 ist somit übersichtlich dargestellt und weist ausschließlich Verbindungslinien 203 auf, die ausschließlich horizontale Komponenten 205 bzw. vertikale Komponenten 207 aufweisen. Das derart erzeugte graphische Diagramm 200 entspricht dem gewünschten Diagramm 200 der Graphik A und ist eindeutig durch den Datenflussgraph 300 der Graphik B repräsentiert.

Fig. 7 zeigt ein Flussdiagramm des Verfahrens 100 zum Erzeugen eines Steuerprogramms zum Steuern eines Automatisierungssystems gemäß der Erfindung.

Das erfindungsgemäße Verfahren 100 zum Erzeugen von Steuerprogrammen zum Steuern von Automatisierungssystemen ist auf die oben dargestellten Beispiele von graphischen Diagrammen 200 gemäß der graphischen Programmiersprache Kontaktplan KOP und die erfindungsgemäßen Datenflussgraphen 300 anwendbar.

Zum Erzeugen eines Steuerprogramms zum Steuern eines Automatisierungssystems wird in einem Diagrammgenerierungsschritt 101 zunächst ein graphisches Diagramm 200 des Steuerprogramms gemäß der graphischen Programmiersprache Kontaktplan KOP für speicherprogrammierbare Steuerungen SPS generiert. Das graphische Diagramm 200 umfasst hierbei eine Mehrzahl von Elementen 201, die jeweils über Verbindungslinien 203 miteinander verbunden sind. Die Elemente 201 umfassen hierbei wenigstens eine linke Spannungsschiene L und eine rechte Spannungsschiene R und eine Mehrzahl von Elementen 201, die zwischen den linken und rechten Spannungsschienen L, R angeordnet sind. Die zwischen den Spannungsschienen L, R angeordneten Elemente 201 können hierbei Kontakte, Spulen, Aufrufe von Funktionsblockinstanzen, Funktionen oder andere in den Richtlinien zur graphischen Programmiersprache Kontaktplan KOP definierte Elemente umfassen. Die Verbindungslinien 203 können gemäß den oben gezeigten Beispielen ausschließlich aus horizontalen Komponenten 205 und vertikalen Komponenten 207 bestehen.

In einem Graphgenerierungsschritt 103 wird ferner ein Datenflussgraph 300 als eine Repräsentation des graphischen Diagramms 200 des zu erzeugenden Steuerprogramms erzeugt. Der Datenflussgraph 300 umfasst eine Mehrzahl von Knoten 301, die über gerichtete Kanten 303 miteinander verbunden sind. Der Datenflussgraph 300 umfasst wenigstens einen Anfangsknoten 305 und einen Endknoten 307. Der Anfangsknoten 305 repräsentiert die linke Spannungsschiene L des graphischen Diagramms 200, während der Endknoten 307 die rechte Spannungsschiene R des graphischen Diagramms 200 repräsentiert. Zwischen den Anfangs- und Endknoten 305, 307 sind eine Mehrzahl von Knoten 301 angeordnet, die jeweils die Elemente 201 des graphischen Diagramms 200 repräsentieren. Die gerichteten Kanten 303 sind gemäß dem zu Fig. 1 diskutierten Beispiel als geordnete Paare der beiden Knoten 301 definiert, die durch die jeweilige gerichtete Kante 303 miteinander verbunden sind, und entsprechen Verbindungslinien 203 des graphischen Diagramms 200. Eine Kante 303 zwischen zwei Knoten 301 des Datenflussgraphen 300 ist daher dann einzufügen, wenn das graphische Diagramm 200 zwischen den durch die zwei Knoten 301 repräsentierten Elementen 201 eine Verbindungslinie 203 aufweist, die zwischen dem Ausgang eines Elements 201 und dem Eingang des jeweils anderen Elements 201 verläuft, wobei die Verbindungslinie 203 einen direkten Stromfluss zwischen den zwei Elementen 201 in einer Richtung von links nach rechts darstellt. Eine Reihenfolge der Einträge des geordneten Paares gibt hierbei die Richtung der jeweiligen Kante 303 vor. Der Diagrammgenerierungsschritt 101 und der Graphgenerierungsschritt 103 können sowohl zeitlich nacheinander als auch zeitgleich ausgeführt werden. Zeitgleich ist hierbei derart zu verstehen, dass während des Erstellens des graphischen Diagramms 200 eine entsprechende Repräsentation als Datenflussgraph erstellt wird. Eine Überführung von Elementen oder Verbindungslinien des graphischen Diagramms 200 in entsprechende Knoten 301 und Kanten 303 des Datenflussgraphen 300 erfolgt hierbei offensichtlich zeitlich nach der Erstellung im graphischen Diagramm 200 während des Programmierens.

Der Datenflussgraph 300 kann als ein azyklischer Graph ausgebildet sein und einen Anfangsknoten 305 und einen Endknoten 307 umfassen. Die Kanten 303 des Datenflussgraphen 300 sind hierbei als gerichtete Kanten ausgebildet und können als geordnete Paare von Knoten 301 dargestellt sein, wobei die Reihenfolge der im geordneten Paar aufgeführten Knoten 301 die Richtung der jeweiligen Kante 303 definiert.

In einem Programmgenerierungsschritt 105 wird darauffolgend basierend auf dem Datenflussgraph 300 ein entsprechendes Steuerprogramm zum Steuern einer speicherprogrammierbaren Steuerung generiert.

Wie in den obigen Beispielen dargestellt, ist der Datenflussgraph 300 eine eindeutige Repräsentation des dazugehörigen graphischen Diagramms 200 und umfasst den identischen Informationsgehalt des graphischen Diagramms 200. Eine textuelle Darstellung sowohl des graphischen Diagramms 200 als auch des Datenflussgraphen 300 kann gemäß der zum Beispiel in Fig. 1 dargestellten Ausführung bewirkt werden. Die Elemente 201 des graphischen Diagramms 200 bzw. die Knoten 301 des Datenflussgraphen 300 können hierbei Variablen des Steuerprogramms entsprechen und entsprechend die Werte 1 oder 0 annehmen.

Fig. 8 zeigt ein weiteres Flussdiagramm des Verfahrens 100 zum Erzeugen eines Steuerprogramms zum Steuern eines Automatisierungssystems gemäß der Erfindung.

Die in Fig. 8 dargestellte Ausführungsform des erfindungsgemäßen Verfahrens 100 basiert auf der Ausführungsform in Fig. 7 und umfasst alle dort dargestellten Verfahrensschritte. Sofern diese in der folgenden Ausführungsform unverändert bleiben, wird von einer erneuten detaillierten Beschreibung abgesehen.

In der gezeigten Ausführungsform umfasst der Diagrammgenerierungsschritt 101 ein Empfangen von graphischen Programmieraufforderungen gemäß der graphischen Programmiersprache Kontaktplan KOP in einem Empfangsschritt 107. Die graphischen Programmieraufforderungen beschreiben einen Programmiervorgang eines Nutzers und können ein Hinzufügen und/oder ein Entfernen und/oder ein Neuanordnen von Elementen 201 und/oder Verbindungslinien 203 des graphischen Diagramms 200 umfassen. Das Neuanordnen beschreibt hierbei das von Verbindungen zwischen Elementen 201 des graphischen Diagramms 200.

Gemäß eines graphischen Programmiervorgangs können somit durch einen Nutzer beispielsweise innerhalb eines entsprechenden graphischen Editors gemäß aus dem Stand der Technik bekannten graphischen Programmierwerkzeugen für die graphische Programmiersprache Kontaktplan KOP durch Hinzufügen und/oder Entfernen und/oder Neuanordnen von Elementen 201 und/oder Verbindungslinien 203 gewünschte graphische Diagramme 200 eines zu programmierenden Steuerprogramms erstellt werden.

In der gezeigten Ausführungsform umfasst der Graphgenerierungsschritt 103 einen Programmierschritt 109. Im Programmierschritt 109 wird der entsprechende Datenflussgraph 300 durch Hinzufügen und/oder Entfernen und/oder Neuanordnen der Knoten 301 und/oder der Kanten 303 des Datenflussgraphs 300 gemäß den vorgenommenen Programmieraufforderungen modifiziert. Ein Neuanordnen der Knoten 301 beschreibt hierbei eine Neugestaltung der Verbindungen wenigstens eines Knotens 301 mit weiteren Knoten 301 innerhalb des Datenflussgraphen 300. Ein neuangeordneter Datenflussgraph weist somit wenigstens eine Kante 303 zwischen zwei Knoten 301 auf, die im ursprünglichen Datenflussgraph 300 nicht verbunden waren, und/oder ist um wenigstens eine Kante 303 reduziert, die im ursprünglichen Datenflussgraph 300 eine Verbindung zwischen zwei Knoten 301 dargestellt hat.

Durch jede ausgeführte Programmieraufforderung, durch die ein entsprechendes Element 201 und/oder eine entsprechende Verbindungslinie 203 innerhalb des graphischen Programmierwerkzeugs entfernt, hinzugefügt oder neu angeordnet wird, wird eine entsprechende Modifizierung des das jeweilige graphische Diagramm 200 repräsentierenden Datenflussgraphen 300 vorgenommen. Werden durch das graphische Programmieren somit Elemente 201 oder Verbindungslinien 203 des graphischen Diagramms 200 entfernt, wird eine entsprechende Entfernung der die Elemente 201 bzw. Verbindungslinien 203 repräsentierten Knoten 301 bzw. Kanten 303 innerhalb des Datenflussgraphen 300 vorgenommen. Beim Hinzufügen oder Anordnen wird der Datenflussgraph 300 entsprechend angepasst.

Der Datenflussgraph 300 kann somit simultan zu dem graphischen Programmiervorgang innerhalb des graphischen Programmierwerkzeugs, durch den das jeweilige graphische Diagramm 200 erzeugt bzw. modifiziert wird, in einer untergeordneten Ebene, beispielsweise des graphischen Programmierwerkzeugs, als eine zusätzliche Repräsentation des graphischen Diagramms 200 erstellt bzw. modifiziert werden. Die Änderungen, die durch den graphischen Programmiervorgang am graphischen Diagramm 200 vorgenommen werden, werden hierbei nur minimal durch die dem Datenflussgraphen 300 unterliegenden Regeln eingeschränkt, sodass im graphischen Diagramm 200 nahezu einschränkungslos Modifikationen durchgeführt werden können, solange diese in Übereinstimmung zu denen zu der Programmiersprache Kontaktplan KOP definierten Regeln sind. Die einzige maßgebliche Einschränkung durch die Repräsentation durch einen Datenflussgraphen ist die Zyklenfreiheit des Graphen, die jederzeit gewährleistet sein muss.

Die Repräsentation des graphischen Diagramms 200 durch den Datenflussgraphen 300 ist somit im Vergleich zur aus dem Stand der Technik bekannten hierarchischen Struktur nahezu ohne Einschränkung und hierdurch mit einer hohen Flexibilität, wie dies an den Beispielen der Figuren 2 bis 5 dargestellt ist.

In der gezeigten Ausführungsform umfasst der Diagrammgenerierungsschritt 101 ferner einen graphischen Programmierschritt 111. Im graphischen Programmierschritt 111 werden innerhalb des graphischen Diagramms 200 basierend auf den Modifikationen des Datenflussgraphen 300 und gemäß den graphischen Programmieraufforderungen Elemente 201 und/oder Verbindungslinien 203 des graphischen Diagramms 200 hinzugefügt und/oder entfernt und/oder neu angeordnet.

Im graphischen Programmierprozess werden somit zunächst graphische Programmieraufforderungen durch gewünschte Modifikationen innerhalb des graphischen Programmierwerkzeugs erstellt. Basierend auf diesen graphischen Programmieraufforderungen werden Modifikationen der als Repräsentation des jeweiligen graphischen Diagramms 200 dienenden Datenflussgraphen 300 vorgenommen, sofern die graphischen Programmieraufforderungen mit den Strukturanforderungen des Datenflussgraphen 300 konform sind. Die gewünschten Modifikationen, die gemäß den Strukturanforderungen des Datenflussgraphen 300 ausführbar sind, werden darauffolgend innerhalb des graphischen Diagramms 200 umgesetzt, sodass gewünschte Modifikationen basierend auf den angestrebten graphischen Programmieraufforderungen des zu erzeugenden graphischen Diagramms 200 ermöglicht sind.

Wie oben bereits ausgeführt, stellt die Repräsentation der graphischen Diagramme 200 durch die entsprechenden Datenflussgraphen 300 geringere Einschränkungen in der Erzeugung von graphischen Diagrammen 200 dar, sodass durch das erfindungsgemäße Verfahren 100 und die erfindungsgemäßen Datenflussgraphen 300 als Repräsentation der graphischen Diagramme 200 graphische Diagramme 200 erzeugt werden können, die gemäß dem derzeitigen Stand der Technik und der darin vorherrschenden hierarchischen Strukturierung als Repräsentation der graphischen Diagramme 200 nicht realisierbar sind. Darüber hinaus können durch die einfache Struktur der Datenflussgraphen 300 beliebige Modifikationen innerhalb bereits bestehender graphischer Diagramme 200 durchgeführt werden, ohne dass hierzu substantielle Änderungen der graphischen Diagramme 200 erfolgen müssten. Zusätzlich können durch die Repräsentation durch Datenflussgraphen die dazugehörigen graphischen Diagramme 200 vereinfacht werden. Sind beispielsweise bei Änderungen eines graphischen Diagramms 200 Elemente entstanden, die keinen durchgehenden Stromfluss zwischen den linken und rechten Spannungsschienen L, R ermöglichen, weil diese beispielsweise lediglich entweder über einen Eingang oder einen Ausgang mit weiteren Elementen verbunden sind, bei Umwandlung in den Datenflussgraphen entfernt werden, sodass im graphischen Diagramm 200 wie auch im Datenflussgraph keine überflüssigen Elemente oder Knoten enthalten sind. Sind durch Änderungen am graphischen Diagramm 200 hingegen Elemente aus dem graphischen Diagramm 200 entfernt, so werden im Datenflussgraph 300 automatische alle unnötigen Kanten 303, die keine direkte Verbindung zu Knoten 301 des Datenflussgraphen 300 aufweisen, ebenfalls entfernt. Hierdurch wird das entsprechende graphische Diagramm 200 vereinfacht, indem alle Verbindungslinien, die keine direkte Verbindung zwischen Elementen 201 darstellen, ebenfalls entfernt sind.

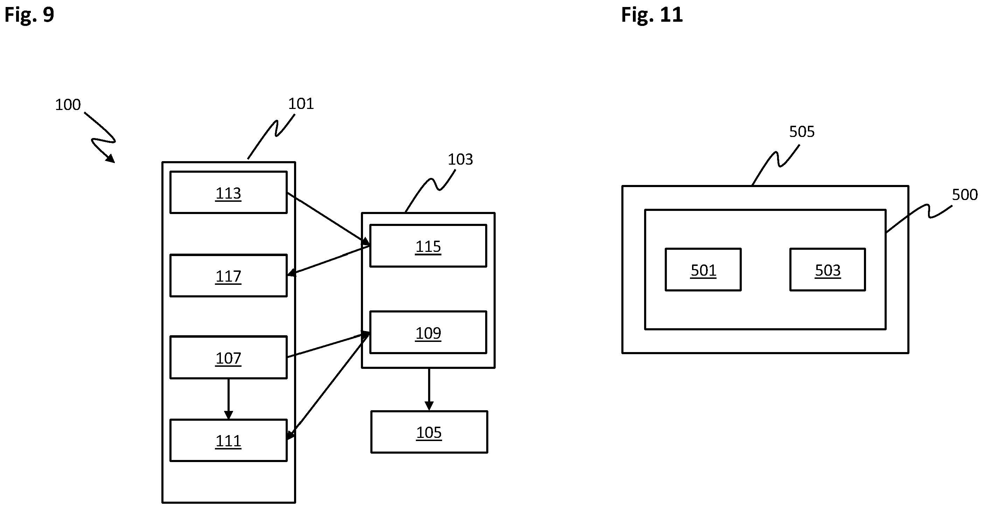

Fig. 9 zeigt ein weiteres Flussdiagramm des Verfahrens 100 zum Erzeugen eines Steuerprogramms zum Steuern eines Automatisierungssystems gemäß einer weiteren Ausführungsform.

Die Ausführungsform des Verfahrens 100 in Fig. 9 basiert auf der Ausführungsform in Fig. 8 und umfasst alle dort beschriebenen Verfahrensschritte. Sofern diese in der folgenden Ausführungsform unverändert bleiben, wird von einer erneuten detaillierten Beschreibung abgesehen.

In der gezeigten Ausführungsform umfasst der Diagrammgenerierungsschritt 101 ferner einen Leseschritt 113. Im Leseschritt 113 wird ein in der graphischen Programmiersprache Kontaktplan KOP programmiertes Steuerprogramm eingelesen. Das Steuerprogramm kann hierbei beispielsweise in der zu Fig. 1 gezeigten textuellen Darstellung der graphischen Diagramme 200 bzw. der Datenflussgraphen 300 dargestellt sein.

Der Graphgenerierungsschritt 103 umfasst ferner einen zweiten Graphgenerierungsschritt 115. Im zweiten Graphgenerierungsschritt 115 wird basierend auf der Information des im Leseschritt 113 eingelesenen Steuerprogramms ein entsprechender Datenflussgraph 300 generiert.

Der Diagrammgenerierungsschritt 101 umfasst ferner einen Darstellungsschritt 117. Im Darstellungsschritt 117 wird basierend auf dem im zweiten Graphgenerierungsschritt 115 generierten Datenflussgraphen 300 ein entsprechendes graphisches Diagramm 200 generiert.

Durch Einlesen eines entsprechenden bereits bestehenden Steuerprogramms kann somit basierend auf der Information des eingelesenen Steuerprogramms ein entsprechender Datenflussgraph 300 generiert werden und basierend auf der Information des generierten Datenflussgraphen 300 ein entsprechendes graphisches Diagramm 200 erzeugt und in einem entsprechenden graphischen Programmierwerkzeug angezeigt werden.

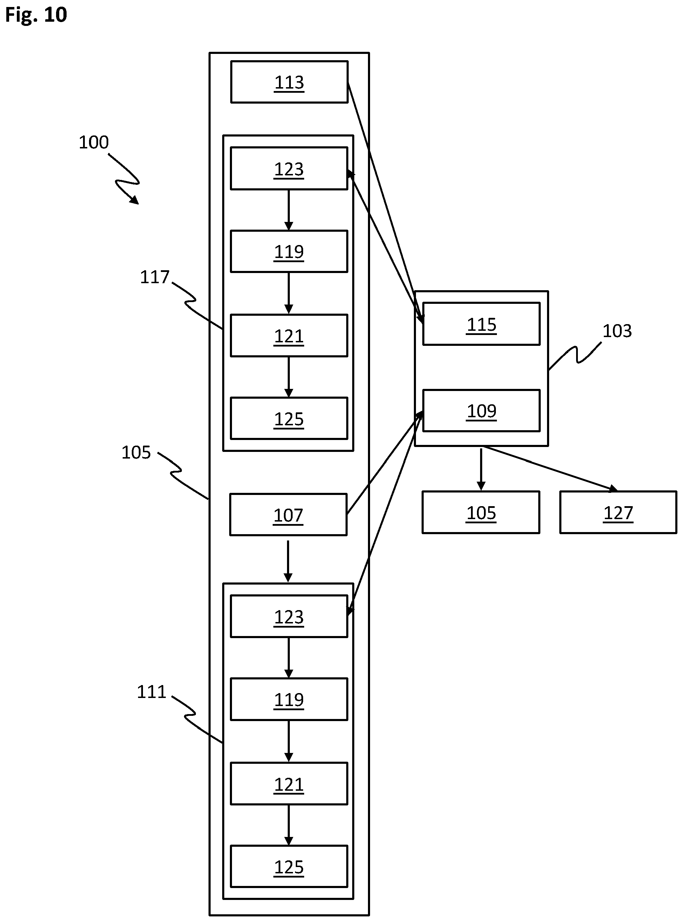

Fig. 10 zeigt ein weiteres Flussdiagramm des Verfahrens 100 zum Erzeugen eines Steuerprogramms zum Steuern eines Automatisierungssystems gemäß einer weiteren Ausführungsform.

Die in Fig. 10 gezeigte Ausführungsform basiert auf der Ausführungsform in Fig. 9 und umfasst alle dort dargestellten Verfahrensschritte. Sofern diese in der folgenden Ausführungsform unverändert bleiben, wird von einer erneuten detaillierten Beschreibung abgesehen.

In der gezeigten Ausführungsform umfassen der graphische Programmierschritt 111 und der Darstellungsschritt 117 eine Mehrzahl von Verfahrensschritten 119 bis 125, mittels derer eine Generierung der entsprechenden graphischen Diagramme 200 basierend auf den im Graphgenerierungsschritt 103 erzeugten Datenflussgraphen 300 beschrieben wird.

In einem Sortierschritt 123 werden hierzu zunächst die Knoten 301 des erzeugten Datenflussgraphen 300 und die entsprechenden Elemente 201 des jeweiligen graphischen Diagramms 200 topologisch sortiert inklusive einer Tiefenbestimmung. Durch das topologische Sortieren der Knoten 301 des Datenflussgraphen 300 und der entsprechenden Elemente 201 des graphischen Diagramms 200 wird sowohl für die Knoten 301 als auch die Elemente 201 eine Reihenfolge ermittelt und eine Zuordnung zu Spalten der Anordnung 400 bestimmt. Analog werden die Elemente 201 des graphischen Diagramms 200 gemäß ihrer Entfernung zur linken Spannungsschiene L angeordnet.

In einem ersten Anordnungsschritt 119 werden darauffolgend die Knoten 301 des Datenflussgraphen 300 in Elemente 201 des graphischen Diagramms 200 überführt und die Elemente 201 in einer zweidimensionalen Anordnung 400 angeordnet.

In einem zweiten Anordnungsschritt 121 werden die gerichteten Kanten 303 des Datenflussgraphen 300 in entsprechende Verbindungslinien 203 zwischen Elementen 201 des graphischen Diagramms 200 überführt und in die zweidimensionale Anordnung 400 zwischen den jeweiligen Elementen 201 angeordnet. Die Verbindungslinien 203 umfassen hierbei ausschließlich horizontale bzw. vertikale Komponenten 205, 207. Die zweidimensionale Anordnung 400 kann hierbei als eine Matrixanordnung mit einer Mehrzahl von Parzelleneinheiten 401 ausgebildet sein, wobei jedes Element 201 in einer separaten Parzelleneinheit 401 angeordnet ist und wobei die Verbindungslinien 203 wenigstens teilweise entlang der Trennlinien 403 zwischen den Parzelleneinheiten 401 angeordnet sind.

Die Anordnung der Elemente 201 bzw. Verbindungslinien 203 des graphischen Diagramms 200 in der zweidimensionalen Anordnung 400 kann hierbei gemäß dem in Graphik D der Fig. 6 gezeigten Beispiel ausgeführt sein. Die Verbindungslinien 203 können die angeführten horizontalen Eingangs- und Ausgangskomponenten 209, 217, die ersten und zweiten vertikalen Komponenten 211, 215 und die horizontale Mittelkomponente 213 umfassen. Die jeweiligen Komponenten der Verbindungslinien 203 können gemäß der in Fig. 6 dargestellten Ausführung jeweils auf den einzelnen vertikalen bzw. horizontalen Trennlinien 403 der zweidimensionalen Anordnung 400 angeordnet sein, sodass jede horizontale Mittelkomponente 213 auf einer exklusiven horizontalen Trennlinie 403 angeordnet ist.

In einem Optimierungsschritt 125 kann die Anordnung 400 der Elemente 201 und/oder der Verbindungslinien 203 des graphischen Diagramms 200 mittels eines geeigneten Optimierungsalgorithmus optimiert werden. Hierzu können Längen von Verbindungslinien 203 und/oder Abstände zwischen Elementen 201 minimiert werden. Alternativ oder zusätzlich können Kreuzungen mehrerer Verbindungslinien 203 vermieden werden. Die Optimierung kann insbesondere gemäß dem zur Graphik E der Fig. 6 dargestellten Beispiel optimiert werden, indem Verbindungslinien 203, die Elemente 201 miteinander verbinden, die innerhalb der zweidimensionalen Anordnung 400 auf einer Höhe angeordnet sind, durch geradlinige horizontale Komponenten 205 ausgestaltet sind. Hierbei sind insbesondere die Start- und Endpunkte einer Verbindungslinie 203 auf einer Höhe angeordnet. Zwischen den Start- und Endpunkten einer Verbindungslinie 203 ist weder ein Element 201 noch eine weitere Kante 203 angeordnet. Darüber hinaus können die Längen der jeweiligen Verbindungslinien 203 durch Reduzierung unnötiger horizontaler oder vertikaler Komponenten verringert werden. Durch die Optimierung der Anordnung 400 der Elemente 201 bzw. der Verbindungslinien 203 kann eine übersichtliche Darstellung des graphischen Diagramms 200 erreicht werden.

Der Optimierungsalgorithmus kann beispielsweise einen aus dem Stand der Technik bekannter Algorithmus zum Lösen eines Färbungsproblems umfassen.

In der gezeigten Ausführungsform umfasst das Verfahren 100 ferner einen Speicherschritt 127. Im Speicherschritt 127 kann der Datenflussgraph 300 in einer Textdarstellung und/oder die ausführbare Version des Steuerprogramms in einer entsprechenden Ausführungsdatei gespeichert werden. Die Textdarstellung des Datenflussgraphen 300 kann hierbei gemäß der zu Fig. 1 ausgeführten Textdarstellung in einer entsprechenden Textdatei gespeichert werden.

Fig. 11 zeigt eine schematische Darstellung eines Programmierwerkzeugs 500 gemäß einer Ausführungsform.

In der gezeigten Ausführungsform umfasst das Programmierwerkzeug 500 eine graphische Editoreinheit 501 und eine Übersetzungseinheit 503. Das graphische Programmierwerkzeug 500 ist auf einer Datenverarbeitungseinheit 505 betreibbar, die beispielsweise ein Desktop-Computer, ein Laptop oder ein Cloud-Server ist.

Die graphische Editoreinheit 501 ermöglicht es einem Nutzer, gemäß entsprechender graphischer Programmieraufforderungen graphische Diagramme 200 zu erzeugen, die den Anforderungen und Regeln der graphischen Programmiersprache Kontaktplan KOP genügen. Die Übersetzungseinheit 503 ist ferner eingerichtet, die graphischen Programmieraufforderungen bzw. die entsprechenden graphischen Diagramme 200 in dazugehörige Repräsentationen in Form von Datenflussgraphen 300 gemäß dem erfindungsgemäßen Verfahren 100 zu überführen. Darüber hinaus ist die Übersetzungseinheit 503 eingerichtet, die entsprechend erstellten Datenflussgraphen 300 beziehungswiese den Informationsgehalt des Graphen an die Editoreinheit 501 zu transferieren, sodass durch diese eine entsprechende graphische Darstellung bzw. ein entsprechendes graphisches Diagramm erstellt werden kann. Darüber hinaus kann die Übersetzungseinheit 503 eingerichtet sein, basierend auf den erzeugten Datenflussgraphen 300 entsprechende ausführbare Versionen eines Steuerprogramms zu erzeugen. Darüber hinaus ist die Übersetzungseinheit 503 eingerichtet, die erstellten Datenflussgraphen 300 in textueller Darstellung abzuspeichern.

### Bezugszeichenliste

- 100: Verfahren
- 101: Diagrammgenerierungsschritt
- 103: Graphgenerierungsschritt
- 105: Programmgenerierungsschritt
- 107: Empfangsschritt
- 109: Programmierschritt
- 111: graphischer Programmierschritt
- 113: Leseschritt
- 115: zweiter Graphgenerierungsschritt
- 117: Darstellungsschritt
- 119: erster Anordnungsschritt
- 121: zweiter Anordnungsschritt
- 123: Sortierschritt
- 125: Optimierungsschritt
- 127: Speicherschritt

- 200: graphisches Diagramm
- 201: Element
- 203: Verbindungslinie
- 205: horizontale Komponente
- 207: vertikale Komponente
- 209: horizontale Ausgangskomponente
- 211: erste vertikale Komponente
- 213: horizontale Mittelkomponente
- 215: zweite vertikale Komponente
- 217: horizontale Eingangskomponente

- 300: Datenflussgraph
- 301: Knoten
- 303: Kante
- 305: Anfangsknoten
- 307: Endknoten
- 308: erster Knoten
- 309: zweiter Knoten
- 310: dritter Knoten
- 311: vierter Knoten
- 312: fünfter Knoten
- 313: erste Kante
- 314: zweite Kante
- 315: dritte Kante
- 316: vierte Kante
- 317: fünfte Kante
- 315: sechste Kante
- 316: siebte Kante
- 317: achte Kante

- 400: zweidimensionale Anordnung
- 401: Parzelleneinheit
- 403: Trennlinie

- 500: Programmierwerkzeug
- 501: graphische Editoreinheit
- 503: Übersetzungseinheit
- 505: Datenverarbeitungseinheit

- SEQ1: erste Sequenz
- SEQ2: zweite Sequenz
- SEQ3: dritte Sequenz
- ALT1: erste Alternative
- ALT2: zweite Alternative
- ALT3: dritte Alternative
- L: linke Spannungsschiene
- R: rechte Spannungsschiene
- E1: erster Kontakt
- E2: zweiter Kontakt
- E3: dritter Kontakt
- A1: erste Spule
- A2: zweite Spule
- A3: dritte Spule
- FB1: erste Funktionsblockinstanz
- FB2: zweite Funktionsblockinstanz
- CALC: Funktionsblock
- a: erster Eingang
- b: zweiter Eingang
- c: dritter Eingang
- x: erster Ausgang
- y: zweiter Ausgang

## Patentansprüche

1. Verfahren (100) zum Erzeugen eines Steuerprogramms zum Steuern eines Automatisierungssystems, wobei das Verfahren (100) umfasst:
Generieren eines graphischen Diagramms (200) des Steuerprogramms gemäß der graphischen Programmiersprache Kontaktplan KOP für speicherprogrammierbare Steuerungen durch eine graphische Editoreinheit (501) eines Programmierwerkzeugs (500) in einem Diagrammgenerierungsschritt (101);
Generieren eines Datenflussgraphen (300) als eine Repräsentation des graphischen Diagramms (200) durch eine Übersetzungseinheit (503) des Programmierwerkzeugs (500) in einem Graphgenerierungsschritt (103), wobei Elemente (201) des graphischen Diagramms (200) als Knoten (301) und Verbindungslinien (203) zwischen Elementen (201) des graphischen Diagramms (200) als Kanten (303) des Datenflussgraphen (300) repräsentiert sind; und
Generieren einer durch eine speicherprogrammierbare Steuerung ausführbaren Version des Steuerprogramms basierend auf dem Datenflussgraphen (300) durch die Übersetzungseinheit (503) des Programmierwerkzeugs (500) in einem Programmgenerierungsschritt (105), wobei der Diagrammgenerierungsschritt (101) umfasst:
Empfangen von graphischen Programmieraufforderungen gemäß der graphischen Programmiersprache Kontaktplan KOP in einem Empfangsschritt (107), wobei die graphischen Programmieraufforderungen ein Hinzufügen und/oder ein Entfernen und/oder ein Neuanordnen von Elementen (201) und/oder Verbindungslinien (203) des graphischen Diagramms (200) umfassen; wobei der Graphgenerierungsschritt (103) umfasst:
Modifizieren des Datenflussgraphen (300) durch Hinzufügen und/oder Entfernen und/oder Neuanordnen von Knoten (301) und/oder Kanten (303) des Datenflussgraphen (300) gemäß den Programmieraufforderungen in einem Programmierschritt (109); und wobei der Diagrammgenerierungsschritt (101) umfasst:
Hinzufügen und/oder Entfernen und/oder Neuanordnen von Elementen (201) und/oder Verbindungslinien (203) innerhalb des graphischen Diagramms (200) basierend auf den Modifikationen des Datenflussgraphen (300) und gemäß den graphischen Programmieraufforderungen in einem graphischen Programmierschritt (111).

2. Verfahren (100) nach Anspruch 1, wobei der Diagrammgenerierungsschritt (101) umfasst:
Einlesen eines in der graphischen Programmiersprache Kontaktplan KOP programmierten Steuerprogramms in einem Leseschritt (113); wobei der Graphgenerierungsschritt (103) umfasst:
Generieren eines Datenflussgraphen (300) basierend auf der Information des eingelesenen Steuerprogramms in einem zweiten Graphgenerierungsschritt (115); und
wobei der Diagrammgenerierungsschritt (101) umfasst:
Generieren des graphischen Diagramms (200) basierend auf der Information des Datenflussgraphen (300) in einem Darstellungsschritt (117).

3. Verfahren (100) nach einem der voranstehenden Ansprüche, wobei der graphische Programmierschritt (111) und/oder der Darstellungsschritt (117) umfassen:
Überführen der Knoten (301) des Datenflussgraphen (300) in Elemente (201) des graphischen Diagramms (200) und Anordnen der Elemente (201) in einer grafischen zweidimensionalen Anordnung (400) in einem ersten Anordnungsschritt (119);
Überführen der Kanten (303) des Datenflussgraphen (300) in Verbindungslinien (203) zwischen Elementen (201) des graphischen Diagramms (200) und Anordnen der Verbindungslinien (203) zwischen den Elementen (201) des graphischen Diagramms (200) in einem zweiten Anordnungsschritt (121), wobei jede Verbindungslinie (203) ausschließlich horizontale Komponenten (205) und/oder vertikale Komponenten (207) aufweist und ausschließlich zwei Elemente (201) verbindet.

4. Verfahren (100) nach Anspruch 3, wobei die grafische zweidimensionale Anordnung (400) als eine Matrixanordnung mit einer Mehrzahl von aneinander angrenzenden flächigen Parzelleneinheiten (401) ausgebildet ist, wobei die flächigen Parzelleneinheiten (401) in einer Mehrzahl von Reihen und Spalten in der Matrixanordnung angeordnet sind, wobei jedes Element (201) in einer Parzelleneinheit (401) angeordnet ist, und wobei die Verbindungslinien (203) wenigstens teilweise entlang Trennlinien (403) zwischen Parzelleneinheiten (401) angeordnet sind.

5. Verfahren (100) nach einem der voranstehenden Ansprüche, wobei der Datenflussgraph (300) als ein azyklischer Graph ausgebildet ist und einen Anfangsknoten (305) und einen Endknoten (307) umfasst.

6. Verfahren (100) nach Anspruch 5, wobei der graphische Programmierschritt (111) und/oder der Darstellungsschritt (117) umfassen:
Topologisches Sortieren der Knoten (301) des Datenflussgraphen (300) und der entsprechenden Elemente (201) des jeweiligen graphischen Diagramms (200) in einem Sortierschritt (123), wobei in dem topologischen Sortieren eine Reihenfolge der Knoten (301) des Datenflussgraphen (300) und der entsprechenden Elemente (201) des graphischen Diagramms (200) ermittelt wird, und wobei die Reihenfolge einer Entfernung eines jeden Knotens (301) zum Anfangsknoten (305) entspricht; und
Anordnen der Elemente (201) des graphischen Diagramms (200) gemäß der Reihenfolge der topologischen Sortierung im ersten Anordnungsschritt (119).

7. Verfahren (100) nach einem der voranstehenden Ansprüche, wobei der graphische Programmierschritt (111) und/oder der Darstellungsschritt (117) umfassen:
Optimieren der Anordnung der Elemente (201) und/oder der Verbindungslinien (203) des graphischen Diagramms (200) mittels eines Optimierungsalgorithmus in einem Optimierungsschritt (125), wobei das Optimieren ein Minimieren von Längen der Verbindungslinien (203) und/oder ein Minimieren von Abständen von Elementen (201) und/oder ein Vermeiden von Kreuzungen mehrerer Verbindungslinien (203) umfasst, und wobei der Optimierungsalgorithmus zum Lösen eines Färbungsproblems eingerichtet ist.

8. Verfahren (100) nach einem der voranstehenden Ansprüche, wobei Kanten (303) des Datenflussgraphs (300) als gerichtete Kanten (303) ausgebildet sind, und wobei eine Richtung einer Kante (303) zwischen zwei Knoten (301) des Datenflussgraphen (300) einen Stromfluss zwischen den durch die Knoten (301) repräsentierten Elementen (201) des graphischen Diagramms (200) repräsentiert.

9. Verfahren (100) nach einem der voranstehenden Ansprüche, wobei Elemente (201) des graphischen Diagramms (200) Spannungsschienen (L, R) und/oder Kontakte (E1, E2, E3) und/oder Spulen (A1, A2, A3) und/oder Funktionsblockinstanzen (FB1, FB2) und/oder Funktionsblöcke (CALC) und/oder weitere gemäß der Programmiersprache Kontaktplan KOP definierte Elemente umfassen.

10. Verfahren (100) nach einem der voranstehenden Ansprüche, ferner umfassend:
Speichern des Datenflussgraphen (300) in einer Textdarstellung und/oder Speichern der ausführbaren Version des Steuerprogramms in einer Ausführungsdatei in einem Speicherschritt (127).

11. Programmierwerkzeug (500) zum Erzeugen eines Steuerprogramms zum Steuern eines Automatisierungssystems, wobei das Programmierwerkzeug (500) eine graphische Editoreinheit (501) und eine Übersetzungseinheit (503) umfasst und eingerichtet ist, das Verfahren (100) nach einem der voranstehenden Ansprüche 1 bis 10 auszuführen.

12. Verfahren zum Steuern eines Automatisierungssystems durch Ausführen eines Steuerprogramms, wobei das Steuerprogramm durch das Verfahren (100) zum Erzeugen eines Steuerprogramms zum Steuern eines Automatisierungssystems nach einem der voranstehenden Ansprüche 1 bis 10 erzeugt ist, und wobei das Steuerprogramm durch eine speicherprogrammierbare Steuerung des Automatisierungssystem ausgeführt wird.

## Claims

1. A method (100) for generating a control program for controlling an automation system, the method (100) comprising:
generating a graphical diagram (200) of the control program according to the Ladder Diagram KOP graphical programming language for Programmable Logic Controllers with the aid of a graphical editor unit (501) of a programming tool (500) in a diagram generating step (101);
generating a data flow graph (300) as a representation of the graphical diagram (200) with the aid of a translating unit (503) of the programming tool (500) in a graph generating step (103), wherein elements (201) of the graphical diagram (200) are represented as nodes (301) and connecting lines (203) between elements (201) of the graphical diagram (200) are represented as edges (303) of the data flow graph (300); and
generating a version of the control program executable by a programmable logic controller based on the data flow graph (300) with the aid of a translating unit (503) of the programming tool (500) in a program generating step (105), wherein the diagram generating step (101) comprises:
receiving graphical programming requests according to the graphical programming language ladder diagram KOP in a receiving step (107), wherein the graphical programming requests comprise adding and/or removing and/or rearranging elements (201) and/or connecting lines (203) of the graphical diagram (200); wherein the graph generating step (103) comprises:
modifying the data flow graph (300) by adding and/or removing and/or rearranging nodes (301) and/or edges (303) of the data flow graph (300) according to the programming requests in a programming step (109); and wherein the graph generating step (101) comprises:
adding and/or removing and/or rearranging elements (201) and/or connecting lines (203) within the graphical diagram (200) based on the modifications to the data flow graph (300) and according to the graphical programming requests in a graphical programming step (111).

2. The method (100) according to claim 1, wherein the diagram generating step (101) comprises:
reading in a control program programmed in the graphical programming language ladder diagram KOP in a reading step (113); wherein the graph generating step comprises (103):
generating a data flow graph (300) based on the information of the read-in control program in a second graph generating step (115); and wherein the diagram generating step (101) comprises:
generating the graphical diagram (200) based on the information of the data flow graph (300) in a displaying step (117).

3. The method (100) according to any one of the preceding claims, wherein the graphical programming step (111) and/or the displaying step (117) comprise:
converting the nodes (301) of the data flow graph (300) into elements (201) of the graphical diagram (200) and arranging the elements (201) in a graphical two-dimensional array (400) in a first arranging step (119);
converting the edges (303) of the data flow graph (300) into connecting lines (203) between elements (201) of the graphical diagram (200) and arranging the connecting lines (203) between the elements (201) of the graphical diagram (200) in a second arranging step (121), each connecting line (203) comprising exclusively horizontal components (205) and/or vertical components (207) and connecting exclusively two elements (201).

4. The method (100) according to claim 3, wherein the graphical two-dimensional array (400) is embodied as a matrix array having a plurality of planar plot units (401) adjacent to one another, wherein the planar plot units (401) are arranged in a plurality of rows and columns in a matrix array, wherein each element (201) is arranged in a plot unit (401), and wherein the connecting lines (203) are arranged at least partially along separating lines (403) between plot units (401).

5. The method (100) according to any one of the preceding claims, wherein the data flow graph (300) is embodied as an acyclic graph and comprises a start node (305) and an end node (307).

6. The method (100) according to claim 5, wherein the graphical programming step (111) and/or the displaying step (117) comprise:
topologically sorting the nodes (301) of the data flow graph (300) and the corresponding elements (201) of the respective graphical diagram (200) in a sorting step (123), wherein in the topological sorting an order of the nodes (301) of the data flow graph (300) and the corresponding elements (201) of the graphical diagram (200) is determined, and wherein the order corresponds to a distance of each node (301) from the start node (305); and
arranging the elements (201) of the graphical diagram (200) according to the order of topological sorting in the first arranging step (119).

7. The method (100) according to any one of the preceding claims, wherein the graphical programming step (111) and/or the displaying step (117) comprise:
optimizing the arrangement of the elements (201) and/or the connecting lines (203) of the graphical diagram (200) with the aid of an optimizing algorithm in an optimizing step (125), wherein the optimizing comprises minimizing lengths of the connecting lines (203) and/or minimizing distances of elements (201) and/or avoiding intersections of a plurality of connecting lines (203), and wherein the optimizing algorithm is set up for solving a coloring problem.

8. The method (100) according to any one of the preceding claims, wherein edges (303) of the data flow graph (300) are embodied as directed edges (303), and wherein a direction of an edge (303) between two nodes (301) of the data flow graph (300) represents a current flow between the elements (201) of the graphical diagram (200) represented by the nodes (301).

9. The method (100) according to any one of the preceding claims, wherein elements (201) of the graphical diagram (200) comprise voltage rails (L, R) and/or contacts (E1, E2, E3) and/or coils (A1, A2, A3) and/or functional block instances (FB1, FB2) and/or functional blocks (CALC) and/or further elements defined according to the programming language ladder diagram KOP.

10. The method (100) according to any one of the preceding claims, further comprising: storing the data flow graph (300) in a text representation and/or storing the executable version of the control program in an executing file in a storing step (127).

11. A programming tool (500) for generating a control program for controlling an automation system, the programming tool (500) comprising a graphical editor unit (501) and a translating unit (503) and being configured to carry out the method (100) according to any one of the preceding claims 1 to 10.

12. A method for controlling an automation system by carrying out a control program, wherein the control program is generated by the method (100) for generating a control program for controlling an automation system according to any one of the preceding claims 1 to 10, and wherein the control program is executed by a programmable logic controller of the automation system.

## Revendications

1. Procédé (100) de génération d'un programme de commande pour commander un système d'automatisation, le procédé (100) comprenant :
génération d'un diagramme graphique (200) du programme de commande selon le langage de programmation graphique « Kontaktplan » (KOP) pour des automates programmables par une unité d'éditeur graphique (501) d'un outil de programmation (500) dans une étape de génération de diagramme (101) ;
génération d'un graphe de flux de données (300) en tant qu'une représentation du diagramme graphique (200) par une unité de traduction (503) de l'outil de programmation (500) dans une étape de génération de graphe (103), des éléments (201) du diagramme graphique (200) étant représentés en tant que nœuds (301) et des lignes de connexion (203) entre des éléments (201) du diagramme graphique (200) étant représentées en tant qu'arêtes (303) du graphe de flux de données (300) ; et
génération d'une version du programme de commande pouvant être exécutée par un automate programmable sur la base du graphe de flux de données (300) par l'unité de traduction (503) de l'outil de programmation (500), dans une étape de génération de programme (105), l'étape de génération de diagramme (101) comprenant :
réception d'invites de programmation graphiques selon le langage de programmation graphique « Kontaktplan » (KOP) dans une étape de réception (107), les invites de programmation graphiques comprenant un ajout et/ou une suppression et/ou un réagencement d'éléments (201) et/ou de lignes de connexion (203) du diagramme graphique (200) ; l'étape de génération de graphe (103) comprenant :
modification du graphe de flux de données (300) par ajout et/ou suppression et/ou réagencement de nœuds (301) et/ou d'arêtes (303) du graphe de flux de données (300) selon les invites de programmation dans une étape de programmation (109) ; et l'étape de génération de diagramme (101) comprenant :
ajout et/ou suppression et/ou réagencement d'éléments (201) et/ou de lignes de connexion (203) à l'intérieur du diagramme graphique (200) sur la base des modifications du graphique de flux de données (300) et selon les invites de programmation graphiques dans une étape de programmation graphique (111).

2. Procédé (100) selon la revendication 1, l'étape de génération de diagramme (101) comprenant :
lecture dans un programme de commande programmé dans le langage de programmation graphique « Kontakplan » (KOP) lors d'une étape de lecture (113) ; l'étape de génération de graphique (103) comprenant :
génération d'un graphe de flux de données (300) sur la base des informations du programme de commande lu dans une deuxième étape de génération de graphique (115) ; et
l'étape de génération de diagramme (101) comprenant :
génération du diagramme graphique (200) sur la base des informations du graphe de flux de données (300) dans une étape de représentation (117).

3. Procédé (100) selon l'une des revendications précédentes, l'étape de programmation graphique (111) et/ou l'étape de représentation (117) comprenant :
transfert des nœuds (301) du graphe de flux de données (300) dans des éléments (201) du diagramme graphique (200) et agencement des éléments (201) selon un agencement graphique bidimensionnel (400) dans une première étape d'agencement (119) ;
transfert des arêtes (303) du graphe de flux de données (300) dans des lignes de connexion (203) entre des éléments (201) du diagramme graphique (200) et agencement des lignes de connexion (203) entre les éléments (201) du diagramme graphique (200) dans une deuxième étape d'agencement (121), chaque ligne de connexion (203) ne comportant que des composants horizontaux (205) et/ou des composants verticaux (207) et ne connectant que deux éléments (201).

4. Procédé (100) selon la revendication 3, l'agencement graphique bidimensionnel (400) étant formé comme un agencement matriciel avec une multitude d'unités de parcelle (401) plates adjacentes, les unités de parcelle (401) plates étant disposées en une multitude de rangées et de colonnes dans l'agencement matriciel, chaque élément (201) étant disposé dans une unité de parcelle (401), et les lignes de connexion (203) étant disposées au moins en partie le long de lignes de séparation (403) entre les unités de parcelle (401).

5. Procédé (100) selon l'une des revendications précédentes, le graphe de flux de données (300) étant formé comme un graphe acyclique et comprenant un nœud initial (305) et un nœud d'extrémité (307).

6. Procédé (100) selon la revendication 5, l'étape de programmation graphique (111) et/ou l'étape de représentation (117) comprenant :
un tri topologique des nœuds (301) du graphe de flux de données (300) et des éléments (201) correspondants du diagramme graphique (200) respectifs dans une étape de tri (123), un ordre des nœuds (301) du graphe de flux de données (300) et des éléments (201) correspondants du diagramme graphique (200) étant déterminé lors du tri topologique , et l'ordre correspondant à un éloignement de chaque nœud (301) par rapport au nœud initial (305) ; et
agencement des éléments (201) du diagramme graphique (200) selon l'ordre du tri topologique dans la première étape d'agencement (119).

7. Procédé (100) selon l'une des revendications précédentes, l'étape de programmation graphique (111) et/ou l'étape de représentation (117) comprenant :
optimisation de l'agencement des éléments (201) et/ou des lignes de connexion (203) du diagramme graphique (200) au moyen d'un algorithme d'optimisation dans une étape d'optimisation (125), l'optimisation comprenant une minimisation de longueurs des lignes de connexion (203) et/ou une minimisation de distances d'éléments (201) et/ou un évitement de croisements de plusieurs lignes de connexion (203), et l'algorithme d'optimisation étant mis au point pour résoudre un problème de coloration.

8. Procédé (100) selon l'une des revendications précédentes, des arêtes (303) du graphe de flux de données (300) étant formées comme des arêtes dirigées (303), et une direction d'une arête (303) entre deux nœuds (301) du graphe de flux de données (300) représentant un flux de courant entre les éléments (201) du diagramme graphique (200) représentés par les nœuds (301).

9. Procédé (100) selon l'une des revendications précédentes, des éléments (201) du diagramme graphique (200) comprenant des rails de tension (L, R) et/ou des contacts (E1, E2, E3) et/ou des bobines (A1, A2, A3) et/ou des instances de blocs fonctionnels (FB1, FB2) et/ou des blocs fonctionnels (CALC) et/ou d'autres éléments définis selon le langage de programmation « Kontaktplan » (KOP).

10. Procédé (100) selon l'une des revendications précédentes, comprenant en outre :
stockage du graphe de flux de données (300) dans une représentation textuelle et/ou stockage de la version exécutable du programme de commande dans un fichier d'exécution dans une étape de stockage (127).

11. Outil de programmation (500) pour générer un programme de commande pour commander un système d'automatisation, l'outil de programmation (500) comprenant une unité d'éditeur graphique (501) et une unité de traduction (503) et étant mis au point pour exécuter le procédé (100) selon l'une des revendications précédentes 1 à 10.

12. Procédé de commande d'un système d'automatisation en exécutant un programme de commande, le programme de commande étant généré par le procédé (100) pour générer un programme de commande pour commander un système d'automatisation selon l'une des revendications précédentes 1 à 10, et le programme de commande étant exécuté par un automate programmable du système d'automatisation.
